# EUROPEAN PATENT APPLICATION

(11) **EP 2 752 763 A2**
(43) Date of publication of application: **09.07.2014**
(21) Application number: 14150231.0
(22) Date of filing: 06.01.2014
(51) Int. Cl.: G06F 3/16

(54) **Display apparatus and method of controlling display apparatus**

(30) Priority: 07.01.2013 KR 20130001804
(71) Applicant: Samsung Electronics Co., Ltd, Gyeonggi-do 443-742 (KR)
(72) Inventor: Cha, Tae-hwan, Gyeonggi-do (KR); Kim, Jae-cheol, Gyeonggi-do (KR); Park, Tae-je, Gyeonggi-do (KR); Lee, Cheon-seong, Gyeonggi-do (KR)
(74) Representative: Taor, Simon Edward William

(57) **Abstract**

An electronic apparatus includes: an output; a voice collector configured to collect a voice of a user; a first communicator configured to transmit the voice of the user to a first server and receive text information corresponding to the voice of the user from the first server; a second communicator configured to transmit the received text information to a second server; and a controller configured to, in response to response information corresponding to the text information being received from the second server, control the output to output a system response, differentiated according to an utterance intention included in the voice of the user, based on the response information. The utterance intention relates to a search for content or a recommendation of content.

## Description

Apparatuses and methods consistent with exemplary embodiments generally relate to providing a display apparatus and a method of controlling the display apparatus, and more particularly, to providing a display apparatus that is controlled according to a voice of a user and a method of controlling the display apparatus.

Various types of display apparatuses have been developed and supplied with the development of electronic technology and have gradually added various functions according to the demands of users. In particular, televisions (TVs) are now able connect to the Internet to support an Internet service, and as a result, users are able to view a large number of digital broadcasting channels through a TV.

In the related art, technology using voice recognition has been developed to control a display apparatus. In particular, a TV is now able to recognize a voice of a user and perform a function corresponding to the voice of the user, such as a volume control or a channel change.

However, existing display apparatuses that recognize voices of users in order to perform functions corresponding to the voices of the user do not provide interactive information through interactions with the users.

Exemplary embodiments address at least the above problems and/or disadvantages and other disadvantages not described above. Also, exemplary embodiments are not required to overcome the disadvantages described above, and an exemplary embodiment may not overcome any of the problems described above.

One or more exemplary embodiments provide a display apparatus that outputs different system responses according to whether an utterance intention included in a voice of a user is related to a content search or content recommendation, and a method of controlling the display apparatus.

According to an aspect of an exemplary embodiment, there is provided electronic apparatus including: an output; a voice collector configured to collect a voice of a user; a first communicator configured to transmit the voice of the user to a first server and receive text information corresponding to the voice of the user from the first server; a second communicator configured to transmit the received text information to a second server; and a controller configured to, in response to response information corresponding to the text information being received from the second server, control the output to output a system response, differentiated according to an utterance intention included in the voice of the user, based on the response information. The utterance intention may relate to a search for content or a recommendation of content.

The second server may be further configured to generate different types of the response information according to whether the text information includes a keyword indicating that the utterance intention relates to the search for content or a keyword indicating that the utterance intention relates to the recommendation of content and transmit the different types of the response information to the electronic apparatus.

In response to the utterance intention being related to the search for content, the controller may be further configured to output a search list of contents, searched according to the utterance intention, as the system response.

In response to the utterance intention being related to the recommendation of content, the controller may be further configured to output a recommendation list of contents, which are selected from contents searched according to the utterance intention, based on viewer ratings, as the system response.

In response to the utterance intention being related to the recommendation of content, the controller may be further configured to output a recommendation list of contents, which are selected from contents searched according to the utterance intention, based on user preference information, as the system response.

The electronic apparatus may be a display apparatus.

According to an aspect of another exemplary embodiment, there is provided a method of controlling an electronic apparatus. The method may include: collecting a voice of a user; transmitting the voice of the user to a first server and receiving text information corresponding to the voice of the user from the first server; transmitting the received text information to a second server; and in response to response information corresponding to the text information being received from the second server, outputting a system response, differentiated according to an utterance intention included in the voice of the user, based on the response information. The utterance intention may relate to a search for content or a recommendation of content.

The second server may be further configured to generate different types of the response information according to whether the text information includes a keyword indicating that the utterance intention relates to the search for content or a keyword indicating that the utterance intention relate to the recommendation of content and transmit the different types of the response information to the electronic apparatus.

In response to the utterance intention being related to the search for content, a search list of contents, searched according to the utterance intention, may be output as the system response.

In response to the utterance intention being related to the recommendation of content, a recommendation list of contents, which are selected from contents searched according to the utterance intention, based on viewer ratings, may be output as the system response.

In response to the utterance intention being related to the recommendation of content, a recommendation list of contents, which are selected from contents searched according to the utterance intention, based on user preference information, may be output as the system response.

The electronic apparatus may be a display apparatus.

According to an aspect of another exemplary embodiment, there is provided a method of providing a system response including: receiving a voice of a user; and outputting the system response corresponding to a determined utterance intention included in the voice of the user and response information corresponding to the voice of the user. The determined utterance intention may relate to a search for content or a recommendation of content.

In response to the determined utterance intention relating to the search for content, a search list of contents, searched according to the determined utterance intention, may be output as the system response.

In response to the determined utterance intention relating to the recommendation of content, a recommendation list of contents, selected from contents searched according to the determined utterance intention, may be output as the system response.

The recommendation list of contents may be selected, from the contents searched according to the determined utterance intention, based on viewer rating information or user preference information.

The determined utterance intention may be determined by comparing the voice of the user to stored example sentences or keywords.

The outputting the system response may include displaying the system response.

According to an aspect of another exemplary embodiment, there is provided an electronic device including: an input configured to receive a voice of a user; an output configured to output a system response; a communicator configured to transmit text information corresponding to the voice of the user to a server and receive response information corresponding to the text information from the server; and a controller configured to, in response to the response information being received, control the output to output the system response. The system response may correspond to a determined utterance intention included in the voice of the user and the response information, and the determined utterance intention may relate to a search for content or a recommendation of content.

In response to the determined utterance intention relating to the search for content, the controller may be further configured to control the output to output a search list of contents, searched according to the determined utterance intention, as the system response.

In response to the determined utterance intention relating to the recommendation of content, the controller may be further configured to control the output to output a recommendation list of contents, selected from contents searched according to the determined utterance intention, as the system response.

The recommendation list of contents may be selected, from the contents searched according to the determined utterance intention, based on viewer rating information or user preference information.

The determined utterance intention may be determined by comparing the voice of the user to stored example sentences or keywords.

The electronic device may be a display device.

According to an aspect of another exemplary embodiment, there is provided a server configured to communicate with an electronic device, the server including: a communicator configured to receive, from the electronic device, text information corresponding to the voice of a user and transmit, to the electronic device, response information corresponding to the text information; a storage configured to store information for generating the response information; and a controller configured to determine an utterance intention included in the received text information and generate the response information based on the utterance intention and the received text information. The utterance intention may be determined to relate to a search for content or a recommendation of content.

According to an aspect of another exemplary embodiment, there is provided an electronic apparatus as set out in claim 1. Preferred features of this aspect are set out in claims 2 to 6.

According to an aspect of another exemplary embodiment, there is provided a method of controlling an electronic apparatus as set out in claim 7. Preferred features of this aspect are set out in claims 8 to 12.

According to an aspect of another exemplary embodiment, there is provided a server as set out in claim 13.

The above and/or other aspects will be more apparent by describing certain exemplary embodiments with reference to the accompanying drawings, in which:
FIG. 1 is a view illustrating an interactive system according to an exemplary embodiment;
FIG. 2 is a block diagram illustrating a display apparatus according to an exemplary embodiment;
FIG. 3 is a block diagram illustrating a detailed structure of the display apparatus of FIG. 2;
FIG. 4 is a block diagram illustrating a first server of FIG. 1;
FIG. 5 is a block diagram illustrating a second server of FIG. 1;
FIGS. 6 through 12C are views illustrating a method of displaying a user interface (UI) screen according to an exemplary embodiment; and
FIG. 13 is a flowchart illustrating a method of controlling a display apparatus according to an exemplary embodiment.

Certain exemplary embodiments will now be described in greater detail with reference to the accompanying drawings.

In the following description, the same drawing reference numerals are used for the same elements, even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

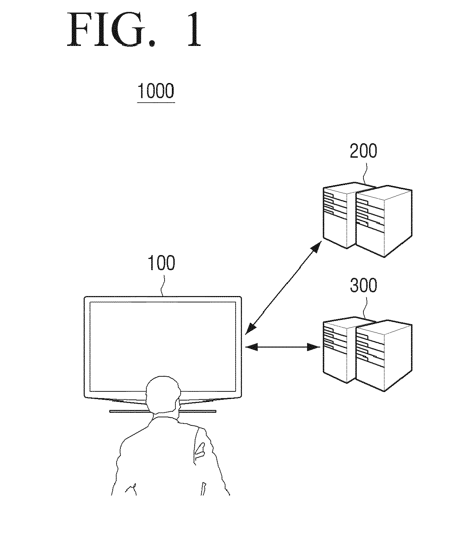

FIG. 1 is a view illustrating an interactive system 1000 according to an exemplary embodiment. Referring to FIG. 1, the interactive system 1000 includes a display apparatus 100, a first server 200, and a second server 300.

The display apparatus 100 may be controlled by a remote controller (not shown) that is to control the display apparatus 100. In detail, the display apparatus 100 may perform an operation corresponding to a remote control signal received from the remote controller. For example, if the display apparatus 100 is realized as a TV, as shown in FIG. 1, the display apparatus 100 may perform an operation, such as power on/off, a channel change, a volume change, or the like, according to the received remote control signal.

The display apparatus 100 may also perform various operations according to a voice of a user.

In detail, the display apparatus 100 may perform a function corresponding to the voice of the user or may output a system response corresponding to the voice of the user.

For this purpose, the display apparatus 100 transmits the collected voice (received voice signal) of the user to the first server 200. If the first server 200 receives the voice of the user from the display apparatus 100, the first server 200 converts the received voice of the user into text information (or a text) and transmits the text information to the display apparatus 100.

The display apparatus 100 transmits the text information, which is received from the first server 200, to the second server 300. If the second server 300 receives the text information from the display apparatus 100, the second server 300 generates response information corresponding to the received text information and transmits the response information to the display apparatus 100.

The display apparatus 100 may perform various operations based on the response information received from the second server 300.

Here, the response information may include at least one of a control command through which the display apparatus 100 performs a particular function, a control command through which the display apparatus 100 outputs the system response, and various types of information about the system response output from the display apparatus 100.

In detail, the display apparatus 100 may perform the function corresponding to the voice of the user. In other words, the display apparatus 100 may perform the function corresponding to the voice of the user among functions that may be provided by the display apparatus 100. For example, if a voice of the user "Turn on channel ○ (channel number)" is input, the display apparatus 100 may change a channel to the channel ○ based on a control command received from the second server 300. For this purpose, the second server 300 may transmit the control signal, which is to change the channel of the display apparatus 100 to the channel ○, to the display apparatus 100.

In this case, the display apparatus 100 may also provide the system response corresponding to the corresponding function. In other words, the display apparatus 100 may output information about a function performed according to the voice of the user as at least one of a voice and a user interface (UI) screen (a text, an image, or the like). In the above-described example, the display apparatus 100 may output information about a changed channel or a message indicating that the channel has been completely changed, as at least one of a voice and a UI screen.

The display apparatus 100 may output the system response corresponding to the voice of the user. Here, the system response may be output as at least one of the voice and the UI screen. For example, if the voice of the user that inquires a broadcasting time of a particular program is input, the display apparatus 100 may output the broadcasting time of the particular program as at least one of a voice and a UI screen.

In particular, the display apparatus 100 may output a system response differentiated according to an utterance intention included in the voice of the user. In other words, the system response corresponds to the utterance intention. Here, the utterance intention of the user may be related to a search or a recommendation of a content (e.g. a content item).

In detail, if the utterance intention is related to the search of the content, the display apparatus 100 may output a search list of contents, which are searched according to the utterance intention, as the system response. For example, if a voice of the user "Search for a broadcasting program where ○○○ (an actor name) appears" is input, the display apparatus 100 may output a list of broadcasting programs where ○○○ (an actor name) appears, as the system response.

If the utterance intention is related to the recommendation of the content, the display apparatus 100 may output a recommendation list of contents, which are selected from contents searched according to the utterance intention, as the system response, wherein the contents are selected based on viewer ratings.

For example, if a voice of the user "Recommend a broadcasting program where ○○○ (an actor name) appears" is collected, the display apparatus 100 may output a list of broadcasting programs where ○○○ (an actor name) appears and which are listed in order of highest viewer ratings.

If the utterance intention is related to the recommendation of the content, the display apparatus 100 may output a recommendation list of contents, which are selected from contents searched according to the utterance intention, as the system response, wherein the contents are selected based on user preference information.

For example, if a voice of the user "Recommend a broadcasting program where ○○○ (an actor name) appears" is collected, the display apparatus 100 may output a list of broadcasting programs that are provided through a channel that the user has recently viewed, among broadcasting programs where ○○○ (an actor name) appears. Alternatively, the display apparatus 100 may output a list of broadcasting programs having the same genres as broadcasting programs that the user frequently views. For this purpose, the second server 300 may transmit at least one of the control commands, through which the display apparatus 100 outputs the system response, and various types of information about the system response output from the display apparatus, to the display apparatus 100.

As described above, the display apparatus 100 may output different types of system responses according to whether the utterance intention included in the voice of the user is to search for or to recommend a content. Therefore, the user may be provided with a system response corresponding to the intention of the user, and thus convenience of the user may be improved.

The display apparatus 100 is illustrated as the TV in FIG. 1, but this is only an example. In other words, the display apparatus 100 may be realized as various types of electronic devices such as a TV, a portable phone such as a smart phone, a desktop personal computer (PC), a notebook PC, a navigation system, etc.

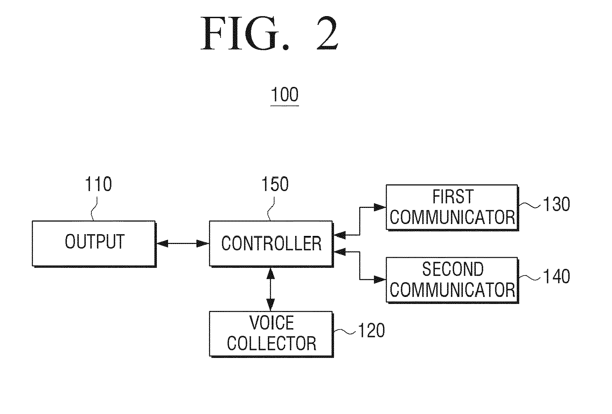

The first and second servers 200 and 300 are realized as separate servers in FIG. 2, but this is only an example. In other words, the first and second severs 200 and 300 may be realized as an interactive server including the first and second servers 200 and 300.

FIG. 2 is a block diagram illustrating the display apparatus 100, according to an exemplary embodiment. Referring to FIG. 2, the display apparatus 100 includes an output 110, a voice collector 120, a first communicator 130, a second communicator 140, and a controller 150.

The output 110 outputs at least one of a voice and an image. In detail, the output 110 may output a system response corresponding to a voice of the user collected through the voice collector 120 as at least one of a voice and a graphic UI (GUI).

For this purpose, the output 110 may include a display (not shown) and an audio output (not shown).

In detail, the display may be realized as a liquid crystal display (LCD), an organic light-emitting diode (OLED), a plasma display panel (PDP), or the like. The display may provide various types of display screens that may be provided through the display apparatus 100. In particular, the display may form a UI screen including at least one of a text, an image, an icon, and a GUI to display the system response corresponding to the voice of the user on the UI screen.

The audio output may be realized as an output port, such as a jack or the like, or a speaker to output the system response corresponding to the voice of the user as a voice.

The output 110 may output various types of contents. Here, the contents may include a broadcasting content, a video on demand (VOD) content, a digital versatile disc (DVD) content, etc. For example, the display may output an image constituting a content, and the audio output may output an audio constituting the content.

The voice collector 120 receives (collects) a voice signal of the user. For example, the voice collector 120 may be realized as a microphone for collecting the voice of the user to be embedded in the display apparatus 100 in order to form a single body or to be installed separately from the display apparatus 100. If the voice collector 120 is installed separately from the display apparatus 100, the voice collector 120 may be realized in a form that is held by a hand of the user or a form that is placed on a table and connected to the display apparatus 100 by wired or wireless connection to transmit the collected voices of the user to the display apparatus 100.

The voice collector 120 determines whether the collected voice signal is a voice of the user and filters noise (for example, an air conditioner sound, a cleaner sound, a music sound, or the like) from the voice of the user.

For example, if an analog voice of the user is input, the voice collector 120 samples the analog voice and converts the sampled analog voice into a digital signal.

The voice collector 120 calculates energy of the digital signal to determine whether the energy of the digital signal is higher than or equal to a preset value.

If the energy of the digital signal is higher than or equal to the preset value, the voice collector 120 removes a noise component from the digital signal and transmits the digital signal, from which the noise component has been removed, to the first communicator 130. Here, the noise component is unexpected noise that may occur in a home environment and may include an air conditioner sound, a cleaner sound, a music sound, or the like. If the energy of the digital signal is lower than the preset value, the voice collector 120 does not perform particular processing on the digital signal but waits for another input.

Therefore, whole audio processing is not activated by a sound other than the voice of the user, and thus unnecessary power consumption may be prevented.

The first communicator 130 communicates with the first server 200 of FIG. 1. In detail, the first communicator 130 may transmit the voice of the user to the first server 200 and receive text information corresponding to the voice of the user from the first server 200.

The second communicator 140 communicates with the second server 300 of FIG. 1. In detail, the second communicator 140 may transmit the received text information to the second server 300 and receive response information corresponding to the text information from the second server 300.

For this purpose, the first and second communicators 130 and 140 may communicate with the first and second servers 200 and 300 by using various communication methods.

For example, the first and second communicators 130 and 140 may communicate with the first and second servers 200 and 300 by using a wire/wireless local area network (LAN), a wide area network (WAN), Ethernet, Bluetooth, Zigbee, a universal serial bus (USB), IEEE₁₃₉₄, Wi-Fi, etc. For this purpose, the first and second communicator 130 and 140 may include chips or input ports that respectively correspond to respective communication methods. For example, if the first and second communicators 130 and 140 communicate with the first and second servers 200 and 300 by using the wire LAN, the first and second communicators 130 and 140 may include wire LAN cards (not shown) and input ports (not shown).

In the above-described exemplary embodiment, the display apparatus 100 additionally includes the first and second communicators 130 and 140 to communicate with the first and second servers 200 and 300, but this is only an example. Alternatively, the display apparatus 100 may communicate with the first and second servers 200 and 300 through one communication module.

The first and second communicators 130 and 140 communicate with the first and second servers 200 and 300 in the above-described exemplary embodiment, but this is only an example. Alternatively, the first and second communicators 130 and 140 may be connected to a web server (not shown) to perform web browsing or may be connected to a content provider providing a VOD service to search for the VOD content.

The controller 150 controls an overall operation of the display apparatus 100. In other words, the controller 150 may control operations of the output 110, the voice collector 120_{,} the first communicator 130, and the second communicator 140. The controller 150 may include a central processing unit (CPU), a module for controlling the display apparatus 100, and a read only memory (ROM) and a random access memory (RAM) storing data.

In detail, the controller 150 may collect the voice of the user through the voice collector 120 and control the first communicator 130 to transmit the collected voice of the user to the first server 300. If the text information corresponding to the voice of the user is received from the first server 200, the controller 150 may control the second communicator 140 to transmit the received text information to the second server 300.

If the response information corresponding to the text information is received from the second server 300, the controller 150 may perform various operations based on the received response information.

In detail, the controller 150 may perform a function corresponding to the voice of the user based on the received response information.

Here, the response information may include a control command for controlling a function of the display apparatus 100. In detail, the control command may include a command for performing a function corresponding to the voice of the user among functions that may be executed in the display apparatus 100. Therefore, the controller 150 may control elements of the display apparatus 100 to perform the function corresponding to the voice of the user based on the control command received from the second server 300.

For example, if the display apparatus 100 that is realized as a TV collects a voice of the user "Turn on channel ○ (channel number)," the second server 300 may determine an utterance intention of "Turn on the channel ○ (the channel number)" as a request for a channel change to the channel ○ (the channel number) and transmit a control command for changing a channel to the channel ○ (the channel number) to the display apparatus 100. Therefore, the controller 150 may control the display apparatus 100 to change the channel to the channel ○ (the channel number) based on the received control command and output a content that is provide through the channel ○ (the channel number).

However, this is only an example, and the controller 150 may control the elements of the display apparatus 100 to perform various operations, such as power on/off, a volume control, etc., according to the collected voice of the user.

The controller 150 may also control the output 110 to output the system response corresponding to the voice of the user based on the received response information.

For this purpose, the response information may include various types of information for outputting the system response corresponding to the voice of the user from the display apparatus 100. In this case, the response information may further include a control command for outputting the system response corresponding to the voice of the user from the display apparatus 100.

For example, the second server 300 may express the system response output from the display apparatus 100 according to the voice of the user as a text and transmit the text to the display apparatus 100.

Therefore, the controller 150 may convert text information into a voice by using a Text to Speech (TTS) engine and output the voice through the output 110. Here, the TTS engine is a module that converts a text into a voice, and the controller 150 may convert the text information into the voice by using various TTS algorithms that are disclosed in related arts.

The controller 150 may form a UI screen including the text and output the UI screen through the output 110.

For example, if the display apparatus 100 that is realized as the TV collects a voice of the user "When is ○○○ (a broadcasting program name) broadcast?", the second server 300 may determine an utterance intention of "When is ○○○ (a broadcasting program name) broadcast?" as an inquiry about a broadcasting time of "○○○ (a broadcasting program name)," express "The inquired broadcasting time of the ○○○ (a broadcasting program name) is ○ o'clock" as a text based on the determined utterance intention, and transmit the text to the display apparatus 100.

In this case, the controller 150 may convert the text "The inquired broadcasting time of the ○○○ (a broadcasting program name) is ○ o'clock" into a voice and output the voice through the output 110. Alternatively, the controller 150 may form a UI screen including the text "The inquired broadcasting time of the ○○○ (a broadcasting program name) is ○ o'clock" and output the UI screen through the output 110.

The response information may include various types of information for outputting the system response related a function performed according to the control command. In this case, the controller 150 may control the display apparatus 100 to perform a function corresponding to the control command among functions that may be executed in the display apparatus 100 and output a system response, which is related to a function executed by using the various types of information for outputting the system response, as at least one of a voice and a UI screen.

For example, if the display apparatus 100 that is realized as the TV collects the voice of the user "Turn on the channel ○ (the channel number)," the second server 300 may transmit a control command for changing a channel of the display apparatus 100 to the channel ○ (the channel number) to the display apparatus 100. Here, the second server 300 may express "The channel of the display apparatus 100 has been changed to the channel ○ (the channel number)" as a text and transmit the text to the display apparatus 100.

Therefore, the controller 150 may change a broadcasting channel output through the output 110 to the channel ○ based on the control command. The controller 150 may also output a system response "The channel of the display apparatus 100 has been changed to the channel ○ (the channel number)" as at least one of a voice and a UI screen.

As described above, the controller 150 may control the display apparatus 100 to execute the function corresponding to the voice of the user or output the system response corresponding to the voice of the user.

If the display apparatus 100 outputs the system response corresponding to the voice of the user without executing an additional function, the voice of the user may be trying to execute a function that may not be executed in the display apparatus 100.

For example, the display apparatus 100 may be realized as a TV that does not support a video call function. In this case, if the display apparatus 100 collects a voice of the user "Call XXX," the second server 300 may transmit a control command for performing a video call to the display apparatus 100. However, since the display apparatus 100 does not support a function corresponding to the control command, the controller 150 may not recognize the control command received from the second server 300. In this case, the controller 150 may output a system response "This function is not supported" as at least one of a voice and a UI screen through the output 110.

In the above-described exemplary embodiment, the second server 300 transmits the text information to the display apparatus 100 to output the system response from the display apparatus 100, but this is only an example.

The second server 300 may also transmit voice data constituting the system response output from the display apparatus 100 or a portion of the voice data to the display apparatus 100. The second server 300 may also transmit a control command to output the system response by using data stored in the display apparatus 100.

Therefore, the controller 150 may output the system response in consideration of a format of the response information received from the second server 300.

In detail, if the voice data constituting the system response or the portion of the voice data is received, the controller 150 may process the corresponding data in a format that may be output from the output 110 and output the corresponding data as a voice.

If the control command for outputting the system response is received, the controller 150 may search the display apparatus 100 for data matching with the control command among the data stored in the display apparatus 100, process the searched data as at least one of a voice and a UI screen, and output the at least one of the voice and the UI screen through the output 110. For this purpose, the display apparatus 100 may store data related to a voice and a UI screen for providing the system response.

For example, the display apparatus 100 may store data having a full sentence format like "The channel is not changed" or "This function is not supported."

Alternatively, the display apparatus 100 may store a portion of data constituting the system response, like "The inquired broadcasting time of ○○○ (the broadcasting program name) is ○ (a broadcasting time)" or "The channel has been changed to ○ (the channel number)." In this case, information for completing the system response may be received from the second server 300.

For example, the controller 150 may complete a corresponding sentence by using the broadcasting program name or the channel number received from the second server 300 and then output the completed sentence as at least one of a voice and a UI screen.

If the response information corresponding to the text information is received from the second server 300, the controller 150 may control the output 110 to output a system response differentiated according to the utterance intention included in the voice of the user based on the response information. Here, the utterance intention of the user may be related to a search for or a recommendation of a content.

In detail, if the utterance intention of the user is related to the search for the content, the controller 150 may output a list of contents searched according to the utterance intention as a system response.

For this purpose, the response information may include information about the searched contents.

For example, if the utterance intention of the user is related to the search for the content, the second server 300 may search for a content matching with the utterance intention. In other words, the second server 300 may search electronic program guide (EPG) information and a VOD service for the content matching with the utterance intention or may search for the content matching with the utterance intention among contents stored in an external apparatus that is connected to the display apparatus 100. The second server 300 may transmit information about the searched content to the display apparatus 100. Here, the information about the searched content may include at least one of a title, a thumbnail image, a broadcasting time, a genre, an actor, and a producer of the content, a channel number through which the content is broadcast, and a channel name.

In this case, the second server 300 may additionally transmit a control command, which is to output the list of contents by using the information about the searched content, to the display apparatus 100.

Therefore, the controller 150 may generate a search list of contents by using the information about the received content, form a UI screen, and output the list of contents on the UI screen.

As another example, the response information may include a control command that is to search for a particular content and output a list of searched contents.

For example, if the utterance intention is related to the search for the content, the second server 300 may search for a content matching with the utterance intention. Even in this case, the second server 300 may search the EPG information and the VOD service for the content matching with the utterance intention or may search for the content matching with the utterance intention among contents stored in the external apparatus that is connected to the display apparatus 100.

The second server 300 may generate a control command that is to search for a content which has the same title as the searched content or which is broadcasted through the same channel as the searched content at the same broadcasting time when the searched content is broadcast and transmit the control command to the display apparatus 100.

Therefore, the controller 150 may search the EPG information for a content corresponding to the control command or may search the VOD service for the content corresponding to the control command. For this purpose, the controller 150 may receive a list of VOD contents and various types of information (for example, titles, thumbnail images, genres, actors, producers, etc. of the VOD contents) from a content provider server. The controller 150 may search for the content corresponding to the control command among the contents stored in the external apparatus that is connected to the display apparatus 100.

The controller 150 may generate a list of searched contents, form a UI screen, and output the list of searched contents on the UI screen.

In the above-described exemplary embodiment, the controller 150 may generate a search list including at least one of a title, a thumbnail image, a broadcasting time, a genre, an actor, and a producer of the content, a channel number through which the content is broadcast, and a channel name. The controller 150 may generate the search list where searched contents are listed in orders of broadcasting times.

If the utterance intention is related to the recommendation of the content, the controller 150 may output a recommendation list of contents selected based on viewer ratings as a system response, wherein the contents are selected from contents that are searched according to the utterance intention.

For this purpose, the response information may include information about the contents searched according to the utterance intention and viewer rating information about the searched contents.

For example, if the utterance intention of the user is related to the recommendation of the content, the second server 300 may search for the content matching with the utterance intention. Even in this case, the second server 300 may search the EPG information and the VOD service for the content matching with the utterance intention or may search for the content matching with the utterance intention among the contents stored in the external apparatus that is connected to the display apparatus 100. The second server 300 may also transmit information about the searched content, for example, at least one of a title, a thumbnail image, a broadcasting time, a genre, an actor, and a producer of the content, a channel number through which the content is broadcast, and a channel name, to the display apparatus 100. Also, the second server 300 may acquire viewer rating information about the searched content through a web search or the like and transmit the acquired viewer rating information to the display apparatus 100.

In this case, the second server 300 may additionally transmit a control command, which is to generate and output a recommendation list by using the information about the searched content and the viewer rating information about the searched content, to the display apparatus 100.

Therefore, the controller 150 may generate the recommendation list of contents by using the information about the searched content and the viewer rating information, form a UI screen, and output the recommendation list of contents through the UI screen.

In detail, the controller 150 may list contents searched based on the viewer rating information in order of high viewer ratings to generate the recommendation list. The controller 150 may select a preset number of contents in order of high viewer ratings from the contents searched based on the viewer rating information and generate the recommendation list so that the recommendation list includes only the selected contents.

In this case, the controller 150 may add various information related to the searched content to the recommendation list. For example, the controller 150 may generate the recommendation list so that the recommendation list includes at least one of the title, the thumbnail image, the broadcasting time, the genre, the actor, the producer, the channel number through which the content is broadcast, and the channel name.

In the above-described exemplary embodiment, the second server 300 searches for the viewer rating information and transmits the viewer rating information to the display apparatus 100, but this is only an example. Alternatively, the second server 300 may not transmit the viewer rating information to the display apparatus 100.

In this case, the display apparatus 100 may pre-store the viewer rating information or may acquire the viewer rating information through a web search.

In detail, the controller 150 may extract a keyword from the information about the content and may perform a web search for acquiring the viewer rating information by using the extracted keyword, wherein the information is received from the second server 300. For example, the controller 150 may extract the title, the broadcasting time, the channel name, or the like of the searched content as the keyword and transmit the extracted keyword to a web server (not shown) to receive the viewer rating information about the content from the web server.

In the above-described exemplary embodiment, the second server 300 transmits the information about the content searched, according to the utterance intention, to the display apparatus 100, but this is only an example. Alternatively, the second server 300 may transmit a control command, which is to search for a particular content and output the searched particular content based on viewer rating information, to the display apparatus 100.

For example, the second server 300 may transmit a control command, which is to search for a content having the same title as the content searched according to the utterance intention and output the searched contents in orders of high viewer ratings, to the display apparatus 100. In this case, the controller 150 may search for a content through the EPG information or the like, and generate and output a recommendation list where the searched contents are listed in order of high viewer ratings.

If the utterance intention of the user is related to the recommendation of the content, the controller 150 may output a recommendation list of contents, which are selected based on user preference information, as a system response, wherein the contents are selected from contents searched according to the utterance intention of the user. Here, the user preference information may include at least one of information about a genre of a content that the user has frequently viewed and information about a channel through which the user has recently viewed the content.

For this purpose, the response information may include the information about the content searched according to the utterance intention and the user preference information.

For example, if the utterance intention of the user is related to the recommendation of the content, the second server 300 may search for a content matching with the utterance intention. Even in this case, the second server 300 may search the EPG information or the VOD service for the content matching with the utterance intention or may search for the content matching with the utterance intention among the contents stored in the external apparatus that is connected to the display apparatus 100.
The second server 300 may transmit information about the searched content, for example, at least one of a title, a thumbnail image, a broadcasting time, a genre, an actor, and a producer of the content, a channel number through which the content is broadcast, and a channel name, to the display apparatus 100.

The second server 300 may transmit the user preference information to the display apparatus 100. In detail, the second server 300 may store information about a content that the user has viewed according to each user account and transmit user preference information corresponding to user account information (for example, an ID and a password) to the display apparatus 100.

For this purpose, the controller 150 may control the second communicator 140 to transmit the user account information and the user preference information to the second server 300.

For example, if a preset event occurs, the controller 150 may control the output 110 to output a UI screen for inputting the user preference information and control the second communicator 140 to transmit the user account information input through the UI screen to the second server 300. Here, the preset event may include an input of an additional user command that is to turn on power or input a user account.

When the user account information is input, the controller 150 may control the second communicator 140 to transmit various types of information about a content that the user views, to the second server 300.

For example, whenever a power on command and a channel change command are input, the controller 150 may determine a content provided through a channel selected based on the EPG information and transmit information, about at least one of a time when the power on command and the channel change command are input, a title and a genre of the determined content, a channel number and a channel name that provide the corresponding content, and an actor and a producer of the content, to the second server 300. Whenever an input terminal change command is input, the controller 150 may determine a content that is received from a selected input terminal and transmit information about a time when the input terminal change command is input, a title, a genre, an actor, and a producer of the determined content to the second server 300. Therefore, the second server 300 may store the user preference information according to each user account information by using information received from the display apparatus 100. In particular, the second server 300 may determine a content that the user has viewed at least a preset number of times, as a content having a high viewing frequency by using the received information and determine a channel that the user has viewed within a preset time as a channel that the user has recently viewed to store the user preference information. If the user account information is received from the display apparatus 100, the second server 300 may transmit the user preference information corresponding to the user account information to the display apparatus 100.

The second server 300 may additionally transmit a control command, which is to generate and output a recommendation list by using the information about the searched content and the user preference information, to the display apparatus 100.

Therefore, the controller 150 may generate a recommendation list of contents by using the information about the content and the user preference information, form a UI screen, and output the recommendation list through the UI screen.

Here, the user preference information may include information about a genre of a content that the user has frequently viewed and a channel that the user has recently viewed.

Therefore, the controller 150 may generate the recommendation list so that the recommendation list includes a content having the same genre as the content that the user has frequently viewed among searched contents. The controller 150 may generate the recommendation list that the recommendation list includes a content provided through the channel that the user has recently viewed among the searched contents.

In this case, the controller 150 may add various types of information related to the searched content to the recommendation list. For example, the controller 150 may generate the recommendation list so that the recommendation list includes at least one of a title, a thumbnail image, a broadcasting time, a genre, an actor, and a producer of the content, and a channel number and a channel name through which the content is broadcast.

The second server 300 transmits the user preference information to the second server 300 in the above-described exemplary embodiment, but this is only an example. Alternatively, the second server 300 may not transmit the user preference information to the display apparatus 100.

In this case, the display apparatus 100 may pre-store the user preference information according to each user's account information.

In other words, if the user account information is input, the controller 150 may determine the user preference information corresponding to the input account information and generate the recommendation list by using the determined user preference information and the information about the content, wherein the information is received from the second server 300.

The second server 300 transmits the information about the content searched, according to the utterance intention, to the display apparatus 100 in the above-described exemplary embodiment, but this is only an example. In other words, the second server 300 may transmit a control command, which is to search for a particular content and output the searched content based on user preference information, to the display apparatus 100.

For example, the second server 300 may transmit a control command, which is to search for a content having the same title as the content searched according to the utterance intention and output the searched content in consideration of the user preference information, to the display apparatus 100. In this case, the controller 150 may search for a content through EPG information or the like and generate a recommendation list so that the recommendation list includes a content having the same genre as a content having a high viewing frequency among the searched contents or a content provided through a channel that the user has recently viewed.

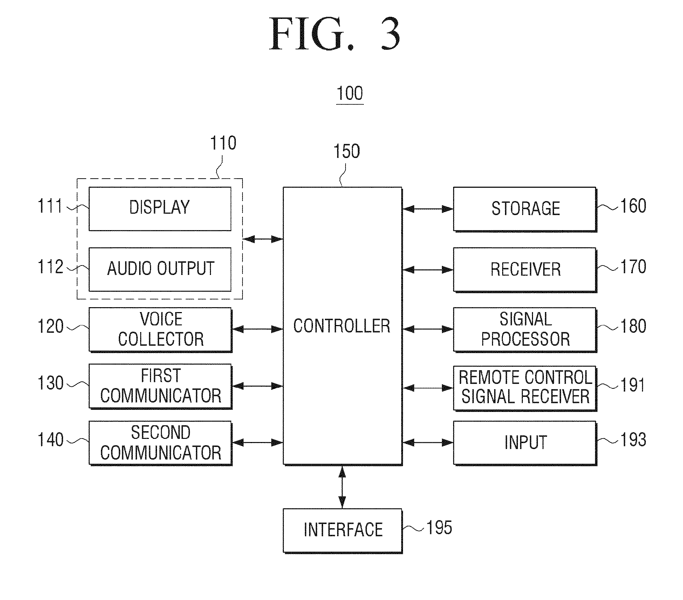

FIG. 3 is a block diagram illustrating a detailed structure of the display apparatus 100 of FIG. 2. Referring to FIG. 3, the display apparatus 100 includes a storage 160, a receiver 170, a signal processor 180, a remote control signal receiver 191, an input 193, and an interface 195, in addition to the elements of FIG. 2. The elements of the display apparatus 100 of FIG. 3 may be controlled by the controller 150. The same elements of FIG. 3 as those of FIG. 2 perform the same functions, and their detailed descriptions are omitted.

The storage 160 is a storage medium that stores various types of programs necessary for operating the display apparatus 100 and may be realized as a memory, a hard disk drive (HDD), or the like. For example, the storage 160 may include an ROM that stores a program for performing an operation of the controller 150, an RAM that temporarily stores data acquired according to the performance of the operation of the controller 150, etc. The storage 160 may further include an electrically erasable and programmable ROM (EEPROM) that stores various types of reference data.

In particular, the storage 160 may store user preference information according to each user's account information. Here, the user preference information may include information about a genre of a content that a user has frequently viewed and a channel that the user has recently viewed

For example, whenever a power on command and a channel change command are input, the controller 150 may determine a content provided from a channel selected through the receiver 170 based on EPG information. Also, the controller 150 may store information about at least one of a time when the power on command and the channel change command are input, a title and a genre of the determined content, and a channel number and a channel name through which the corresponding content is provided, in the storage 160. Whenever an input terminal change command is input, the controller 150 may determine a content received from an input terminal selected through the interface 195 and store information about at least one of a time when the input terminal change command is input, a title and a genre of the determined content, and a channel number and a channel name through which the corresponding content is provided, in the storage 160.

The storage 160 may store viewer rating information. For example, the controller 150 may search for viewer rating information about a content through a web search and store the searched viewer rating information in the storage 160.

The receiver 170 receives various types of contents. In detail, the receiver 170 may receive a content from a broadcasting station that transmits a broadcasting program by using a broadcasting network or a web server that transmits a content file by using the Internet.

According to an exemplary embodiment, if the content is received from the broadcasting station, the receiver 170 may be realized to include an element such a tuner (not shown), a demodulator (not shown), an equalizer (not shown), or the like. If the content is received from a source such as the web server, the receiver 170 may be realized as a network interface card (not shown).

As described above, the receiver 170 may be realized as various types of receivers according to exemplary embodiments.

The signal processor 180 performs signal-processing on the content to output the content, which is received through the receiver 170 or the interface 195, through the output 110.

In detail, the signal processor 180 may perform an operation, such as decoding, scaling, a frame rate conversion, or the like, on an image included in the content to convert the image into a form that may be output from the display 111. The signal processor 180 may also perform signal-processing, such as decoding or the like, on an audio signal included in the content to convert the audio signal into a form that may be output from an audio output 112.

The remote control signal receiver 191 receives a remote control signal from an external remote controller. The controller 150 may perform various operations based on the remote control signal input into the remote control receiver 191. For example, the controller 150 may perform operations, such as power on/off, a channel change, a volume control, etc., according to the remote control signal input from the remote control signal receiver 191.

The input 193 receives various types of user commands. The controller 150 may perform an operation corresponding to a user command input from the input 193. For example, the controller 150 may perform power on/off, a channel change, a volume control, or the like according to the user command input from the input 193.
For this purpose, the input 193 may be realized as an input panel. The input panel may be a touch pad, a keypad including various types of functional keys, numerical keys, special keys, letter keys, etc., or a touch screen.

The interface 195 communicates with an external apparatus (not shown). Here, the external apparatus may be realized as various types of electronic apparatuses to transmit a content to the display apparatus 100.

For example, if the display apparatus 100 is realized as a TV, the external apparatus may be realized as various types of electronic apparatuses that are connected to the display apparatus 100 to perform functions, like a set-top box, a sound system, a game machine, a DVD player, a Blue-ray disc (BD), etc.

For example, the interface 195 may communicate with the external apparatus according to various types of wire communication methods, such as a high definition multimedia interface (HDMI), a USB, etc., or a wireless communication method such as Bluetooth, Zigbee, or the like. For example, the interface 195 may include chips or input ports respectively corresponding to communication methods. For example, if the interface 195 communicates with the external apparatus according to an HDMI communication method, the interface 195 may include an HDMI port.

If it is determined that the external apparatus is connected to the interface 195, the controller 150 may control the interface 195 to request the external apparatus to transmit a list of contents stored in the external apparatus in order to receive the list of contents and various types of information from the external apparatus. In this case, the controller 150 may control the second communicator 140 to transmit the list of contents and the various types of information to the second server 300.

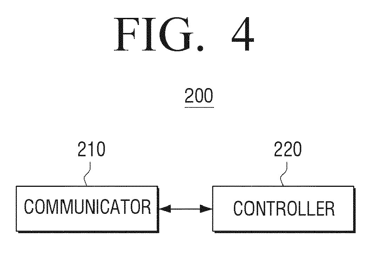

FIG. 4 is a block diagram illustrating the first server 200 of FIG. 1. Referring to FIG. 4, the first server 200 includes a communicator 210 and a controller 220.

The communicator 210 communicates with the display apparatus 100. In detail, the communicator 210 may receive a voice of a user from the display apparatus 100 and transmit text information corresponding to the voice of the user to the display apparatus 100. For this purpose, the communicator 210 may include various types of communication modules.

The controller 220 controls an overall operation of the first server 200. In particular, if the voice of the user is received from the display apparatus 100, the controller 220 controls the communicator 210 to generate the text information corresponding to the voice of the user and transmit the text information to the display apparatus 100.

In detail, the controller 220 may generate the text information corresponding to the voice of the user by using a Speech to Text (STT) engine. Here, the STT engine is a module that converts a voice signal into a text by using various types of STT algorithms that are disclosed in related arts.

For example, the controller 220 detects a start and an end of a voice uttered by the user from the received voice of the user to determine a voice section. In detail, the controller 220 may calculate energy of the received voice signal and classify energy levels of the voice signal according to the calculated energy to detect the voice section through dynamic programming. The controller 220 may detect a phoneme as a minimum unit of a voice within the detected voice section based on an acoustic model to generate phoneme data and apply a Hidden Markov Model (HMM) probabilistic model to the phoneme data to convert the voice of the user into the text.

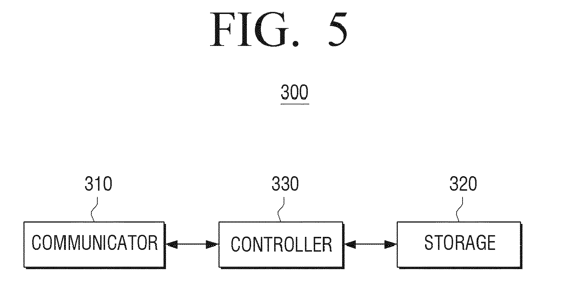

FIG. 5 is a block diagram illustrating the second server 300 of FIG. 1. Referring to FIG. 5, the second server 300 includes a communicator 310, a storage 320, and a controller 330.

The communicator 310 communicates with the display apparatus 100. In detail, the communicator 310 may receive text information from the display apparatus 100 and transmit response information corresponding to the text information to the display apparatus 100. For this purpose, the communicator 310 may include various types of communication modules.

The communicator 310 may be connected to a web server (not shown) to perform web browsing. In other words, the controller 330 may transmit various keywords to the web server through the communicator 310 to perform a web search and receive a web search result.

For this purpose, the storage 320 may pre-store various types of keywords used for the web search or the controller 330 may extract a keyword from the text information received from the display apparatus 100.

For example, a text received from the display apparatus 100 may be "Recommend a broadcasting program where ○○○ (an actor name) appears." In this case, the controller 330 may extract "○○○ (the actor name)" and "the broadcasting program" as keywords from the corresponding text and perform a web search through the extracted keywords to receive viewer rating information about the broadcasting program where ○○○ (the actor name) appears, from the web server.

The storage 320 stores various types of information for generating the response information corresponding to the text information received from the display apparatus 100.

In detail, the storage 320 stores a dialogue pattern of each service domain. Here, the service domains may be classified into "broadcasting," "VOD," "application management," "apparatus control," "information (weather, stock, news, etc.), etc. according to themes to which voices uttered by the user belongs. However, this is only an example, and the service domains may be classified according to various themes besides the above-mentioned themes.

In more detail, the storage 320 may include corpus databases (DBs) according to the service domains. Here, the corpus DBs may be realized as types that store example sentences and answers to the example sentences.

In other words, the storage 320 may store a plurality of example sentences and answers to the example sentences according to each of the service domains. The storage 320 may tag and store information, which is to interpret the example sentences and the answers to the example sentences, to the example sentences.

For example, an example sentence "When will ○○○ (a broadcasting program name) be broadcast?" may be stored in a broadcasting service domain.

In this case, the storage 320 may tag information, which is to interpret the example sentence "When will ○○○ (a broadcasting program name) be broadcast?", to the corresponding example sentence and store the information. In detail, the storage 320 may tag information, which indicates that "○○○ (the broadcasting program name)" indicates a broadcasting program, "When" indicates an inquire for a broadcasting time, and "be broadcast?" indicates a question sentence in the example sentence "When will ○○○ (a broadcasting program name) be broadcast?", to the corresponding example sentence and store the information. The storage 320 may tag information, which indicates that a word related to the broadcasting program is arranged in a front part of an example sentence having a form "When will "○○○" be broadcast?", to the corresponding example sentence and store the information. Here, the word related to the broadcasting program may include a broadcasting program name, an actor, a producer, or the like.

The storage 320 may tag an answer to the example sentence "When will ○○○ (a broadcasting program name) be broadcast?" to the corresponding example sentence and store the answer. In detail, the storage 320 may tag and store "A broadcasting time of (the inquired broadcasting program name) is ○ o'clock" as the answer to "When will ○○○ (a broadcasting program name) be broadcast?"

According to another exemplary embodiment, an example sentence "Turn on channel ○ (channel number)" may be stored in a broadcasting service domain.

In this case, the storage 320 may tag information, which is to interpret the example sentence "Please, turn on channel ○ (channel number)," to the corresponding example sentence and store the information. In detail, the storage 320 may tag information, which indicates that "channel ○ (channel number)" indicates a channel number, "Turn on" indicates a channel selection command, and "Please" indicates a request sentence in the example sentence "Please, turn on channel ○ (channel number)," to the corresponding example sentence and store the information. The storage 320 may tag information, which indicate that a word related to a broadcasting program is arranged in a front part of a example sentence having a form "Please, turn on -," to the corresponding example sentence and store the information. Here, the word related to the broadcasting program may be a channel number, a channel name, a broadcasting program name, an actor, a producer, or the like.

The storage 320 may tag an answer to the example sentence "Please, turn on channel ○ (channel number)"to the corresponding example sentence and store the answer. In detail, the storage 320 may tag "The channel has been changed to channel number." as the answer to the example sentence "Please, turn on channel ○ (channel number)" and store the answer.

The storage 320 may tag a control command for controlling the display apparatus 100 to each example sentence and store the control command. In particular, the storage 320 may tag the control command for controlling the display apparatus 100 to an example sentence corresponding to a voice of the user for controlling the display apparatus 100 and store the control command. For example, the storage 320 may tag a control command, which is to change a channel of the display apparatus 100 to channel number ○, to the example sentence "Please, turn on channel ○ (channel number)" and store the control command. Here, the control command may be a system command having a script format.

As described above, the storage 320 may store an example sentence and an answer to the example sentence. However, example sentences and answers to the example sentences as described above are only an example. Therefore, the storage 320 may store various types of example sentences and answers to the example sentences according to service domains.

The controller 330 may control an overall operation of the second server 300. In particular, if the text information corresponding to the voice of the user is received from the display apparatus 100, the controller 330 may control the communicator 310 to generate the response information corresponding to the received text information and transmit the generated response information to the display apparatus 100 through the communicator 310.

In detail, the controller 330 may control the communicator 310 to analyze the text information in order to determine an utterance intention included in the voice of the user, generate response information corresponding to the determined utterance intention, and transmit the response information to the display apparatus 100.

For this purpose, the controller 330 may detect a corpus DB that stores a dialogue pattern matching with the received text information to determine a service domain to which the voice of the user belongs.

In detail, the controller 330 may compare the received text information with example sentences respectively stored in service domains and determine a service domain to which an example sentence matching with the received text information belongs, as a service domain to which the voice of the user belongs.

For example, if a text "When will ○○○ (a broadcasting program name) be broadcast?" or "Please, turn on channel ○ (channel number)" is received from the display apparatus 100, the controller 320 may determine that a voice of the user collected by the display apparatus 100 belongs a broadcasting service domain.

If an example sentence matching with the received text information does not exist, the controller 330 may statistically determine a domain to which the voice of the user belongs.

For example, the display apparatus 100 may collect a voice of the user "Please, turn on channel ○ (channel number)" and transmit a text of the collected voice of the user to the second server 300. In this case, the controller 330 may determine that a voice of the user is statistically similar to "Please, turn on channel ○ (channel number)," by using a classification model, such as HMM, Condition Random Fields (CRF), Support Vector Machine (SVM), or the like, and determine that "Please, turn on channel ○ (channel number)" belongs to a broadcasting service domain.

The controller 330 may store text information that has been determined as being statistically similar to a pre-stored example sentence. In this case, the controller 330 may store the text information as another example sentence of a service domain to which the statistically similar example sentence is determined to belong. The controller 330 may tag information, for interpreting a newly stored example sentence and an answer to the newly stored example sentence, to the newly stored example sentence and store the information and the answer with reference to the pre-stored example sentence.

For example, "Please, turn on channel ○ (channel number)" may be stored as a new example sentence.

In this case, the controller 330 may tag information, which is to interpret an example sentence such as "Please, turn on channel ○ (channel number)" with reference to "Turn on channel ○ (channel number)," to the corresponding example sentence and store the information. In detail, the controller 330 may tag information, which indicates that "channel ○ (channel number)" indicates a channel number, "Turn on" indicates a channel selection command, and "Please" indicates a type of an example sentence as a request sentence in the example sentence "Please, turn on channel ○ (channel number)," to the corresponding example sentence and store the information. The storage 320 may tag information, which indicates that a word related to a broadcasting program is arranged in a front part of an example sentence having a form "Please, turn on ∼," to the corresponding example sentence and store the information. Here, the word related to the broadcasting program may be a channel number, a channel name, a broadcasting program name, an actor, a producer, or the like.

The storage 320 may tag an answer to "Please, turn on channel ○ (channel number)" to the corresponding example sentence and store the answer. In detail, the storage 320 may tag and store "The channel has been changed to channel number ○" as the answer to "Please, turn on channel ○ (channel number)."

If a plurality of example sentences matching with the text information received from the display apparatus 100 exist and belong to different service domains, the controller 330 may statistically analyze the plurality of example sentences to determine a service domain to which the voice of the user belongs.

In detail, the controller 330 may add weights to words (morphemes) constituting the text information received from the display apparatus 100 based on frequencies of the words existing in each service domain and determine a service domain to which the voice of the user belongs, in consideration of the added weights.

For example, when an example sentence "Turn on ○○○ (a broadcasting program name)" is stored in a broadcasting service domain and a VOD service domain, a text "Please, turn on ○○○ (a broadcasting program name)" may be received from the display apparatus 100.

In this case, the controller 330 may determine that an example sentence matching with "Please, turn on ○○○ (a broadcasting program name)" exists in the broadcasting service domain and the VOD service domain and may add weights to words "turn on" and "Please" constituting "Please, turn on ○○○ (broadcasting program name)" in each of the broadcasting service domain and the VOD service domain based on frequencies of the words "turn on" and "Please" existing in each of the broadcasting service domain and the VOD service domain.

For example, the controller 330 may calculate a ratio of an example sentence including "turn on," occupied in the broadcasting service domain among all example sentences stored in the broadcasting service domain, as a weight of "turn on" in the broadcasting service domain. Also, the controller 330 may calculate a ratio of an example sentence including "Please," occupied in the broadcasting service domain among the all example sentences stored in the broadcasting service domain, as a weight of "Please" in the broadcasting service domain.

According to the same method as the above-described method, the controller 330 may calculate a ratio of an example sentence including "turn on," occupied in the VOD service domain among all example sentences stored in the VOD service domain, as a weight of "turn on" in the VOD service domain. Also, the controller 330 may calculate a ratio of an example sentence including "Please," occupied in the VOD service domain among the all example sentences stored in the VOD service domain, as a weight of "Please" in the VOD service domain.

The controller 330 may calculate a weight added to each word to determine a service domain to which the voice of the user belongs. In the above-described example, the controller 330 may compare a result acquired by multiplying the weights respectively added to "turn on" and "Please" in the broadcasting service domain with a result acquired by multiplying the weights respectively added to "turn on" and "Please" in the VOD service domain to determine that the voice of the user belongs to the broadcasting service domain and the VOD service domain having a higher result value.

In other words, if a result value calculated based on the weights added in the broadcasting service domain is higher than a result value calculated based on the weights added in the VOD service domain, the controller 330 may determine that "Please, turn on ○○○ (broadcasting program name)" belongs to the broadcasting service domain. If the result value calculated based on the weights added in the VOD service domain is higher than the result value calculated based on the weights added in the broadcasting service domain, the controller 330 may determine that "Please, turn on ○○○ (broadcasting program name)" belongs to the VOD service domain.
However, this is only an example, and the controller 330 may statistically determine a service domain to which the voice of the user belongs, by using various methods.

The controller 330 may extract a dialogue act, a main action, and a component slot (or an entity name) from the voice of the user based on the service domain to which the voice of the user belongs.

Here, the dialogue act is a classification criterion related to a form of a sentence and indicates that the corresponding sentence is a statement sentence, a request sentence, or a question sentence.

The main act refers to semantic information indicating that a corresponding utterance indicates a desired act through a dialogue in a particular domain. For example, in the broadcasting service domain, the main act may include power on/off of a TV, a broadcasting program search, a broadcasting program time search, a broadcasting program reservation, or the like. As another example, in an apparatus control domain, the main act may include power on/off of an apparatus, play, pause, or the like.

The component slot refers to entity information about a particular domain indicating an utterance, i.e., information that is added to materialize a meaning of an intended act in a particular. For example, in the broadcasting service domain, the component slot may include a genre, a broadcasting program name, a broadcasting time, a channel number, a channel name, an actor, a producer, or the like. In the apparatus control service domain, the component slot may include an external apparatus name, a maker, or the like.

The controller 330 may determine an utterance intention included in the voice of the user by using the dialogue act, the main act, and the component slot, generate response information corresponding to the determined utterance intention, and transmit the response information to the display apparatus 100.

Here, the response information may indicate that a system response output from the display apparatus 100 is expressed in a text form. Therefore, the display apparatus 100 may output the system response corresponding to the voice of the user based on the response information.

For this purpose, the controller 330 may extract an answer to the determined utterance intention from the storage 320, convert the extracted answer into a text, and transmit the text to the display apparatus 100.

The response information may include a control command that is to perform a function corresponding to the voice of the user. Here, the control command may include a control command that is to control the display apparatus 100 to perform the function corresponding to the voice of the user.

For this purpose, the controller 330 may generate a control command corresponding to the determined utterance intention and transmit the generated control command to the display apparatus 100.

A detailed method of generating response information corresponding to a voice of a user through the controller will now be described.

The controller 330 may extract a dialogue act, a main act, and a component slot from a voice of the user by using an example sentence matching with the voice of the user or information tagged to an example sentence that has been determined as being statistically similar to the voice of the user, generate response information corresponding to the voice of the user, and transmit the response information to the display apparatus 100.

For example, a text "When will ○○○ (broadcasting program name) be broadcast?" may be received from the display apparatus 100.

In this case, the controller 330 may determine that the received text belongs to a broadcasting service domain, extract a dialogue act, a main act, and a component slot from the voice of the user by using information tagged to an example sentence "When will ○○○ (broadcasting program name) be broadcast?" matching with the received text in the broadcasting service domain, and generate response information about the received text.

In other words, information, which indicates that "○○○ (broadcasting program name)" indicates a broadcasting program, "When" indicates a broadcasting time inquiry, and "be broadcast?" indicates a type of the example sentence as a question sentence and which is to interpret the example sentence, is tagged to the example sentence "When will ○○○ (broadcasting program name) be broadcast?" stored in the broadcasting service domain.

Therefore, the controller 330 may determine that the dialogue act of the text "When will ○○○ (broadcasting program name) be broadcast?" received from the display apparatus is the question sentence, the main act is the broadcasting time inquiry, and the component slot is "○○○ (broadcasting program name)," with reference to these types of information. Therefore, the controller 330 may determine that the utterance intention of the user is an inquiry about a broadcasting time of "○○○."

The controller 330 may search the storage 320 for an answer tagged to the example sentence "When will ○○○ (broadcasting program name) be broadcast?" stored in the broadcasting service domain and generate response information by using the tagged answer.

In other words, the controller 330 searches for an answer "A broadcasting time of the inquired broadcasting program is ○ o'clock" tagged to the example sentence "When will ○○○ (broadcasting program name) be broadcast?" stored in the broadcasting service domain, as an answer to the voice of the user.

In this case, the controller 330 may complete a blank included in the searched answer to generate a full sentence.

For example, the controller 330 may write a broadcasting program name "○○○ (broadcasting program name)" in the blank (broadcasting program name) of the answer "A broadcasting time of the inquired broadcasting program is ○ o'clock." The controller 330 may search for a broadcasting time of "○○○ (broadcasting program name)" through EPG information and write the searched broadcasting time in another blank (broadcasting time). Therefore, the controller 330 may express a full sentence "A broadcasting time of the inquired broadcasting program is 7 o'clock on Saturday" as a text form to generate response information and transmit the generated response information to the display apparatus 100.

Therefore, the display apparatus 100 may output "A broadcasting time of the inquired broadcasting program is 7 o'clock on Saturday" as at least one of a voice and a UI screen.

According to another exemplary embodiment, a text "Please, turn on channel ○ (channel number)" may be received from the display apparatus 100.

In this case, the controller 330 may determine that the received text belongs to a broadcasting service domain, extract a dialogue act, a main act, and a component slot from a voice of the user by using information tagged to an example sentence "Please, turn on channel ○ (channel number)" matching with the received text in the broadcasting service domain, and generate response information to the received text.

In other words, information, which indicates that "channel ○ (channel number)" indicates a channel number, "turn on" indicates a broadcasting selection command, "Please" indicates a type of the example sentence as a request sentence, are tagged as information for interpreting an example sentence to the example sentence "Please, turn on channel ○ (channel number)" stored in the broadcasting service domain. Therefore, the controller 330 may determine that the dialogue of the text "Please, turn on channel o (channel number)" received from the display apparatus 100 is a request sentence, the main act is a broadcasting selection command, and the component slot is channel ○ (channel number), with reference these types of information. As a result, the controller 330 may determine that an utterance intention of the user is a request for selection a broadcasting of channel ○.

The controller 330 may search the storage 320 for an answer tagged to the example sentence "Please, turn on channel ○ (channel number)" stored in the broadcasting service domain and generate response information by using the tagged answer.

In other words, the controller 330 searches for an answer "The channel has been changed to channel number" tagged to the example sentence "Please, turn on channel ○ (channel number)" stored in the broadcasting service domain, as an answer to the voice of the user.

In this case, the controller 330 may complete a blank included in the searched answer to generate a full sentence. For example, the controller 330 may write channel number "channel ○ (channel number)" in a blank (channel number) of the answer "The channel has been changed to channel number." Therefore, the controller 330 may express a full sentence "The channel has been changed to channel number" into a text form to generate response information and transmit the generated response information to the display apparatus 100.

The controller 330 may search the storage 320 for a control command tagged to the example sentence "Please, turn on channel ○ (channel number)" stored in the broadcasting service domain and transmit the searched control command to the display apparatus 100. In other words, the controller 330 may transmit a control command, which is to change the channel of the display apparatus 100 to channel ○.

Therefore, the display apparatus 100 may change the channel to channel ○ based on the response information received from the second server 300 and output a system response "The channel has been changed to channel ○" as at least one of a voice and a UI screen.

In the above-described example, the controller 330 generates the control command that is to perform the function of the display apparatus 100 based on a control command tagged to an example sentence. However, this is only an example.

Alternatively, the controller 330 may generate a control command based on a determined utterance intention and transmit the control command to the display apparatus 100. For example, if the utterance intention of the user is determined as a request for a selection of broadcasting of channel ○, the controller 330 may generate a control command for changing the channel to channel ○ and transmit the control command to the display apparatus 100.

Also, in the above-described example, the controller 330 transmits information for outputting a system response along with the control command for performing the function of the display apparatus 100. However, this is only an example. Alternatively, the controller 330 may transmit only the control command for performing the function of the display apparatus 100 to the display apparatus 100 according to the utterance intention of the user.

In this case, the display apparatus 100 may not output an additional system response or may output a system response by using data pre-stored in the display apparatus 100.

The controller 330 may extract a dialogue act, a main act, and a component slot from a voice of the user by using information tagged to an example sentence that has been determined as being statistically similar to the voice of the user and generate response information corresponding to the voice of the user.

For example, a text "When will ΔΔΔ (broadcasting program name) be broadcast?" may be received from the display apparatus 100

In this case, the controller 330 may determine that the text "When will ΔΔΔ (broadcasting program name) be broadcast?" is statistically similar to an example sentence "When will ○○○ (broadcasting program name) be broadcast?" stored in a broadcasting service domain. Therefore, the controller 330 may extract a dialogue act, a main act, and a component slot from a voice of the user by using information tagged to the example sentence "When will ○○○ (broadcasting program name) be broadcast?" stored in the broadcasting service domain and generate response information corresponding to the voice of the user.

In other words, information, which indicates that a word related to a broadcasting program is arranged in a front part of "When will - be broadcast?" and which is to interpret an example sentence, is tagged to the example sentence "When will ○○○ (broadcasting program name) be broadcast?" stored in the broadcasting service domain. Therefore, the controller 330 may determine which meaning a word "ΔΔΔ (broadcasting program name)" has among a broadcasting program name, an actor, a producer, or the like that is the word related to the broadcasting program.

For this purpose, the storage 320 may include an entity name dictionary that stores information about each element in each service domain or a TIMEX dictionary.

In other words, the controller 330_{,} with reference to the entity name dictionary or the TIMEX dictionary, may determine that ΔΔΔ (broadcasting program name)" is a word indicating a broadcasting program name.

However, this is only an example, and the controller 330 may determine which meaning ΔΔΔ (broadcasting program name)" has, by using EPG information or the like or by using a pre-stored example sentence and CRF.

Therefore, the controller 330 may determine that a dialogue act of the text "When will ΔΔΔ (broadcasting program name) be broadcast?" received from the display apparatus 100 is a question sentence, a main act thereof is a broadcasting time, and a component slot thereof is ΔΔΔ (broadcasting program name). Also, the controller 330 may determine that the utterance intention included in the voice of the user is an inquiry about a broadcasting time of ΔΔΔ

The controller 330 may generate response information to the text "When will ΔΔΔ (broadcasting program name) be broadcast?" by using an answer tagged to the example sentence "When will ○○○ (broadcasting program name) be broadcast?" stored in the broadcasting service domain and transmit the generated response information to the display apparatus 100.

In other words, the controller 330 searches for an answer "A broadcasting time of (the inquired broadcasting program name) is ○ o'clock." tagged to the example sentence "When will ○○○ (broadcasting program name) be broadcast?" stored in the broadcasting service domain as an answer to the voice of the user. The controller 330 may express a full sentence "A broadcasting time of the inquired ΔΔΔ (broadcasting program name) is 11 o'clock on Wednesday" into a text form to generate response information and transmit the generated response information to the display apparatus 100.

If the display apparatus 100 pre-stores data constituting a system response, the controller 330 may transmit a control command, which is to output the corresponding data as a system response, to the display apparatus 100.

If the display apparatus 100 pre-stores some of the data constituting the system response, the controller 330 may transmit only information, which is to output a complete system response, to the display apparatus 100.

For example, if the display apparatus 100 pre-stores an answer "A broadcasting time of (the inquired broadcasting program name) is ○ o'clock," the controller 330 may control the communicator 310 to transmit information about a broadcasting program name and a broadcasting time, which are about inquired by the user, to form the answer stored in the display apparatus as a full sentence, to the display apparatus 100. In this case, the controller 330 may transmit an additional control command, which is to output the answer pre-stored in the display apparatus 100, to the display apparatus 100.

Therefore, the display apparatus 100 may write information received from the second server 300 in the pre-stored answer to output "A broadcasting time of the inquired broadcasting program name is 7 o'clock on Saturday" as a system response.

In the above-described exemplary embodiment, the controller 330 extracts a dialogue act, a main act, and a component slot by using information tagged to an example sentence. However, this is only an example. Alternatively, the controller 330 may extract a dialogue act and a main act from a voice of the user by using Maximum Entropy Classifier (MaxEnt) and extract a component slot by using CRF.

However, the exemplary embodiments are not limited thereto, and the controller 330 may extract a dialogue act, a main act, and a component slot from a voice of the user by using various well-known methods.

If an utterance intention of the user included in a currently received voice of the user is not determined, the controller 330 may determine the utterance intention of the user included in the currently received voice of the user with reference to a previously received voice of the user.

In detail, if the utterance intention of the user included in the currently received voice of the user is not determined based on a service domain to which the previously received voice of the user belongs, the controller 330 may determine the utterance intention of the user included in the currently received voice of the user with reference to the previously received voice of the user.

In other words, the controller 330 may compare the currently received voice of the user with a dialogue pattern stored in a corpus DB to determine whether the currently received voice of the user corresponds to an initial utterance of the user in the dialogue pattern. If it is determined that the currently received voice of the user does not correspond to the initial utterance of the user, the controller 330 may determine the utterance intention included in the currently received voice of the user with reference to the previously received voice of the user.

For this purpose, the storage 320 may hierarchically store each example sentence in each service domain. In other words, the storage 320 may store an example sentence matching with a voice that the user may initially utter, as an uppermost layer in each service domain and hierarchically store example sentences matching with voices that the user may utter later.

For example, a voice of the user "When will ○○○ (broadcasting program name) be broadcast?" may be input, and then a voice of the user "When will it be broadcast?" may be input. In this case, if it is determined that the voice of the user "When will it be broadcast?" does not correspond to an initial utterance of the user in the broadcasting service domain, the controller 330 may determine an utterance intention of "When will it be broadcast?" based on the voice of the user "When will ○○○ (broadcasting program name) be broadcast?" that is previously received.

In other words, the controller 330 may determine an utterance intention of "When will it be broadcast?" as an inquiry about a program start time of ○○○ by using ○○○ (broadcasting program name) included in the previously received voice of the user to determine the utterance intention of the voice of the user "When will it be broadcast?" from which a component slot may not be extracted.

As described above, the second server 300 may generate response information corresponding to the utterance intention of the user and transmit the response information to the display apparatus 100. Also, the display apparatus 100 may perform a function corresponding to the voice of the user based on the response information received from the second server 300 or may output a system response corresponding to the voice of the user.

The display apparatus 100 may output different system responses according to whether the voice of the user includes an utterance intention of searching for a content or an utterance intention of being recommended a content.

For this purpose, the second server 300 may generate different types of response information according to whether text information includes a keyword having an intention of searching for a content or a keyword having an intention of being recommended a content and transmit the different types of response information to the display apparatus 100.

In other words, the storage 320 may store information, which is to determine whether the user wants to search for a content or to be recommended a content, as information for interpreting an example sentence.

For example, an example sentence "Please, search for a broadcasting program where ○○○ (an actor's name) appears" may be stored in a broadcasting service domain.

In this case, the storage 320 may tag information, which is to interpret an example sentence "Please, search for a broadcasting program where ○○○ (actor's name) appears," to the corresponding example sentence and store the information. In detail, the storage 320 may tag information, which indicates that ○○○ (actor's name) indicates an actor's name, "appear" and "search for a broadcasting program" indicate an inquiry about a broadcasting program where an actor appears, "search for" indicates an utterance intention of the user as a search for a content, and "Please" indicates a type of the example sentence as a request sentence in the example sentence "Please, search for a broadcasting program where ○○○ (actor's name) appears," to the corresponding example sentence and store the information.

In the above-described exemplary embodiment, the storage 320 stores information which indicates that an utterance intention of the user of "search for" of the example sentence "Please, search for a broadcasting program where ○○○ (actor's name) appears" corresponds to a search for a content. However, this is only an example. Alternatively, the storage 320 may store information which indicates that an utterance intention of the user of "search for" of the example sentence "Please, search for a broadcasting program where ○○○ (actor's name) appears" corresponds to a search for a content and information which indicates that an utterance intention of the user of "let me know" of an example sentence "Please, let me know a broadcasting program where ○○○ (actor's name) appears" corresponds to a search for a content.

As described above, if an example sentence includes a word related to a content search, the storage 320 may tag corresponding information to each example sentence and storage the corresponding information.

According to another exemplary embodiment, an example sentence "Please, recommend a broadcasting program where ○○○ appears" may be stored in a broadcasting service domain.

In this case, the storage 320 may tag information, which is to interpret the example sentence "Please, recommend a broadcasting program where ○○○ appears," to the corresponding example sentence and store the information. In detail, the storage 320 may tag information, which indicates that ○○○ (actor's name) indicates an actor's name, "appears" and "recommend a broadcasting program" indicate an inquire about a broadcasting program where an actor appears, "recommend" indicates an utterance of the user as a recommendation of a content, and "Please" indicates a type of the example sentence as a request sentence in the example sentence "Please, recommend a broadcasting program where ○○○ appears," to the corresponding example sentence and store the information.

In the above-described exemplary embodiment, the storage 320 stores information indicating that an utterance intention of the user of "recommend" of the example sentence "Please, recommend a broadcasting program where ○○○ appears" corresponds to a recommendation of a content. However, this is only an example. According to another exemplary embodiment, the storage 320 may store information indicating that an utterance intention of the user of "watchable" of an example sentence "Which one is watchable among broadcasting programs where ○○○ (actor's name)?" corresponds to a recommendation of a content.

As described above, if an example sentence includes a word related to a content recommendation, the storage 320 may tag corresponding information to each example sentence and store the corresponding information.

The controller 330 may determine whether a voice of the user includes an utterance intention related to a content search or a content recommendation, generate response information corresponding to the determined utterance intention, and transmit the response information to the display apparatus 100.

In detail, the controller 330 may extract information, which is related to a dialogue act, a main act, and a component slot, from a voice of the user by using information tagged to an example sentence matching with the voice of the user or an example sentence that has been determined as being statistically similar to the voice of the user. Also, the controller 330 may determine whether the voice of the user includes an utterance intention related to a content search or a content recommendation, by using the extracted information.

The controller 330 may also generate response information corresponding to the determined utterance intention of the user and transmit the generated response information to the display apparatus 100.

In detail, if the utterance intention of the user is related to the content search, the controller 330 searches for a content matching with the utterance intention.

In this case, the controller 330 may search a content provider server for a content matching the utterance intention of the user, wherein the content provider server uses EPG information or provides a VOD service.

The controller 330 may search an external apparatus (not shown) connected to the display apparatus 100 for a content matching with the utterance intention of the user. For example, if information about a content stored in the external apparatus connected to the display apparatus 100 is received from the display apparatus 100, the controller 330 may search for a content matching with the utterance intention of the user among contents stored in the external apparatus.

The controller 330 may transmit information about the searched content to the display apparatus 100. Here, the information about the searched content may include at least one of a title, a thumbnail image, a broadcasting time, a genre, an actor, and a producer of the content, and a channel number and a channel name through which the content is broadcast.

In this case, the controller 330 may transmit a control command, which is to output a search list of contents by using the information about the searched content, to the display apparatus 100.

The controller 330 may transmit a control command, which is to search for a particular content and output a list of searched contents, to the display apparatus 100.

In detail, the controller 330 may search for a content matching with the utterance intention of the user from EPG information or a VOD service or search the external apparatus connected to the display apparatus 100 for a content matching with the utterance intention of the user.

The controller 330 may generate a control command, which is to search for a content that has the same title as the searched content or is broadcast through the same channel and the same broadcasting time where the searched content is broadcast, and transmit the control command to the display apparatus 100.

If the utterance intention of the user is related to the content recommendation, the controller 330 may search for a content matching with the utterance intention and transmit information about the searched content to the display apparatus 100. Here, the information about the searched content may include at least one of a title, a thumbnail image, a genre, an actor, and a producer of the content, and a channel number and a channel name through which the content is broadcast.

Even in this case, the controller 330 may search for a content matching with the utterance content of the user from EPG information or a VOD service. The controller 330 may search the external apparatus connected to the display apparatus 100 for a content matching with the utterance intention of the user.

Here, the controller 330 may transmit viewer rating information about the searched content to the display apparatus 100.

For this purpose, the controller 330 may perform a web search to acquire viewer rating information by using various types of keywords. For example, the controller 330 may extract a title, a broadcasting time, etc. of the searched content as keywords and transmit the extracted keywords to a web server (not shown) to receive viewer rating information about the searched content from the web server.

The controller 330 may control the communicator 310 to transmit user preference information to the display apparatus 100. For this purpose, the storage 320 may pre-store user preference information according to each user account. The controller 330 may determine user preference information matching with user account information received from the display apparatus 100, among user preference information stored in the storage 320 and transmit the determined user preference information to the display apparatus 100.

An operation that is performed by the controller 330 according to whether an utterance intention of the user is related to a content search or a content recommendation will now be described.

"Please, search for a broadcasting program where ○○○ (actor's name) appears" may be received from the display apparatus 100.

In this case, the controller 330 may determine that a received text belongs to a broadcasting service domain, determine an utterance intention of the user by using information tagged to an example sentence "Please, search for a broadcasting program where ○○○ (actor's name) appears" matching with the received text in the broadcasting service domain, and generate response information to the received text.

In other words, information, which is to interpret an example sentence and indicates that ○○○ (actor's name) indicates an actor's name, "appears" and "search for a broadcasting program" indicate an inquiry about a broadcasting program where an actor appears, "search for" indicates an utterance intention of the user as a content search, and "Please" indicates a type of the example sentence as a request sentence, is tagged to the example sentence "Please, search for a broadcasting program where ○○○ (actor's name) appears" stored in the broadcasting service domain.

Therefore, the controller 330 may determine that a dialogue act of the text "Please, search for a broadcasting program where ○○○ (actor's name) appears" received from the display apparatus 100 is a request sentence, a main act of the received text is an inquiry about a broadcasting program where an actor appears, and a component slot of the received text is ○○○ (actor's name), with reference to these types of information. Here, the controller 330 may complete a blank included in the information for interpreting the example sentence. In other words, the controller 330 may determine that the blank (actor) in the inquiry about the broadcasting program where an actor appears is ○○○ (actor's name) determined as a component slot.

Therefore, the controller 330 may determine that an utterance intention of ○○○ (actor's name) included in "Please, search for a broadcasting program where ○○○ (actor's name) appears." is a request for a broadcasting program where ○○○ (actor's name) appears.

The controller 330 may determine whether the utterance intention of the user is related to a content search or a content recommendation, based on the information for interpreting the example sentence.

In the above-described exemplary embodiment, information, which indicates that an utterance intention corresponds to a content search, is tagged to the example sentence "Please, search for a broadcasting program where ○○○ (actor's name) appears." Therefore, the controller 330 may determine that a voice of the user "Please, search for a broadcasting program where ○○○ (actor's name) appears" includes an utterance intention of searching for a content.

Therefore, the controller 330 may determine that the voice of the user "Please, search for a broadcasting program where ○○○ (actor's name) appears" is related to the content search and includes an utterance intention of requesting a broadcasting program where ○○○ (actor's name) appears.

The controller 330 generates response information based on the determined utterance intention. In the above-described exemplary embodiment, the controller 330 may search for a broadcasting program where ○○○ (actor's name) appears, with reference EPG information, and search for information (for example, at least one of a title, a thumbnail image, a genre, an actor, and a producer of the broadcasting program, and a channel number and a channel name through which a content is broadcast) about the searched broadcasting program. The controller 330 may also transmit the information about the searched broadcasting program as response information to the display apparatus 100.

According to another exemplary embodiment, "Please, recommend a broadcasting program where ○○○ (actor's name) appears" may be received from the display apparatus 100.

In this case, the controller 330 may determine that a received text belongs to a broadcasting service domain, determine an utterance intention of the user by using information tagged to an example sentence "Please, recommend a broadcasting program where ○○○ (actor's name) appears" matching with the text received in the broadcasting service domain, and generate response information corresponding to the received text.

In other words, information, which is to interpret an example sentence and indicates that ○○○ (actor's name) indicates an actor's name, "appears" and "search for a broadcasting program" indicate an inquiry about a broadcasting program where an actor appears, "recommend" indicates an utterance intention of the user as a content recommendation, and "Please" indicates a type of the example sentence as a request sentence, is tagged to the example sentence "Please, recommend a broadcasting program where ○○○ (actor's name) appears."

Therefore, the controller 330 may determine that a dialogue act of the text "Please, recommend a broadcasting program where ○○○ (actor's name) appears" received from the display apparatus 100 is a request sentence, a main act of the received text is an inquiry about a broadcasting program where ○○○ appears, and a component slot of the received text is ○○○ (actor's name), with reference to these types of information. Here, the controller 330 may complete a blank included in the information for interpreting the example sentence. In other words, the controller 330 may determine that the blank (actor's name) is determined as the component slot in the inquiry about the broadcasting program where an actor appears.

Therefore, the controller 330 may determine that an utterance intention of "Please, recommend a broadcasting program where ○○○ (actor's name) appears" is a request for a broadcasting program where ○○○ (actor's name) appears.

The controller 330 may determine whether the utterance intention of the user is related to a content search or a content recommendation, based on the information for interpreting the example sentence.

In the above-described exemplary embodiment, information, which indicates that the utterance intention corresponds to the content recommendation, is tagged to the example sentence "Please, recommend a broadcasting program where ○○○ (actor's name) appears." Therefore, the controller 330 may determine that a voice of the user "Please, recommend a broadcasting program where ○○○ (actor's name) appears" includes an utterance intention of recommending a content.

Therefore, the controller 330 may determine that the voice of the user "Please, recommend a broadcasting program where ○○○ (actor's name) appears" is related to the content recommendation and includes an utterance intention of requesting a broadcasting program where ○○○ (actor's name) appears.

The controller 330 generates response information based on the determined utterance intention. In the above-described exemplary embodiment, the controller 330 may search for the broadcasting program where ○○○ (actor's name) appears, with reference to EPG information, and search for information (for example, at least one of a title, a thumbnail image, a broadcasting time, a genre, an actor, and a producer of the broadcasting program, and a channel number and a channel name through which a content is broadcast) about the searched broadcasting program.

The controller may perform a web search for viewer rating information of the searched broadcasting program. The controller 330 may determine user preference information matching with user account information.

Therefore, the controller 330 may transmit the information about the searched broadcasting program and the viewer rating information of the searched broadcasting program as response information to the display apparatus 100. Alternatively, the controller 330 may transmit the information about the searched broadcasting program and the user preference information as response information to the display apparatus 100.

Therefore, the display apparatus 100 may output different types of system responses according to whether an utterance intention included in a voice of the user is related to a content search or a content recommendation.

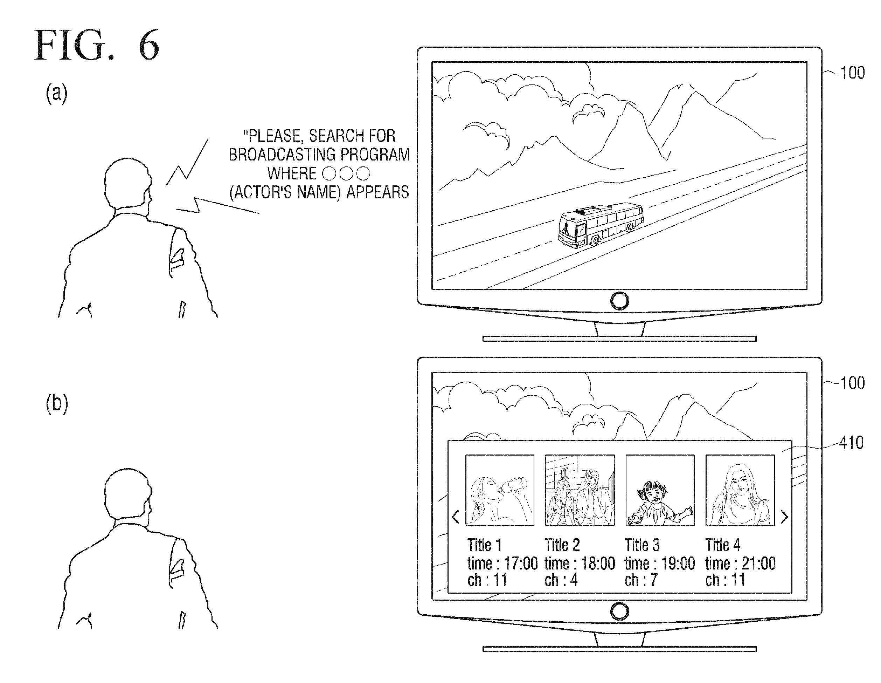

A method of displaying a UI screen according to various exemplary embodiments will now be described with reference to FIGS. 6 through 12C and FIGS. 2 through 5.

As shown in (a) of FIG. 6, a user may utter "Please, search for a broadcasting program where ○○○ (actor's name) appears."

In this case, the controller 330 may search for a broadcasting program where ○○○ (actor's name) appears, with reference to EPG information, and transmit information about the searched broadcasting program as response information to the display apparatus 100.

Therefore, the controller 150 may output a system response corresponding to "Please, search for a broadcasting program where ○○○ (actor's name) appears" based on response information received from the second server 300.

In detail, as shown in (b) of FIG. 6, the controller 150 may display a search list 410 where broadcasting programs where ○○○ (actor's name) appears are listed according to broadcasting time orders. In this case, the controller 150 may add at least one of a broadcasting program name, a broadcasting time, a channel name and channel number that provide the broadcasting program, and an actor and a producer of the broadcasting program, to the search list 410.

Here, the controller 150 may control a search list to include the preset number of contents. Therefore, if the number of searched contents is higher than the number of contents displayed through the search list, the controller 150 may display the preset number of contents in the search list and change a page of the search list according to a user command to display the other contents. For this purpose, the controller 150 may display a GUI that is to select a previous page and a next page.

In the above-described exemplary embodiment, the controller 330 searches a broadcasting program where ○○○ (actor's name) appears, with reference to EPG information, and transmits the search result to the display apparatus 100. However, this is only an example.

Alternatively, the controller 330 may search for a content matching with an utterance intention of the user among contents stored in EPG information, a VOD service, and an external apparatus (not shown) connected to the display apparatus 100 and transmit the search result to the display apparatus 100.

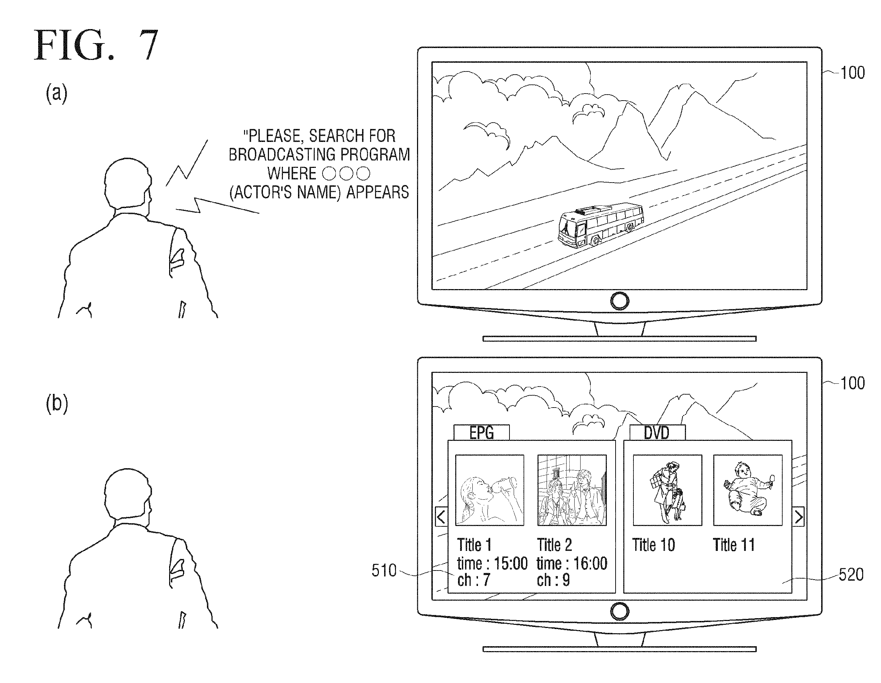

For example, as shown in (a) of FIG. 7, the user may utter "Please, search for a broadcasting program where ○○○ (actor's name) appears."

In this case, the controller 330 may search for a broadcasting program where ○○○ (actor's name) appears, among contents stored in EPG information, a VOD service, and an external apparatus (not shown) connected to the display apparatus 100 and transmit the search result to the display apparatus 100.

In this case, as shown in (b) FIG. 7, the controller 150 may classify contents respectively searched according to services to display a search list.

For example, a broadcasting program where ○○○ (actor's name) appears may searched from EPG information and a DVD player connected to the display apparatus 100. In this case, the controller 150 may display a search list 510 and a search list 520 on one screen, wherein the search list 510 includes the broadcasting program searched from the EPG information, the search list 520 includes a DVD content searched from the DVD player.

As described above, the controller 150 may generate and display additional lists of contents searched according to services. In this case, if the number of searched content is higher than the number of contents displayed in each search list, the controller 150 may display the preset number of contents in each search list and change a page of each search list according to a user command to display the other contents.

As described above, if contents, which are searched in one service in a process of displaying the other contents according to a page change, include contents that has not been displayed but include all contents that have been searched and displayed in another service, the controller 150 may remove a search list displaying all of searched contents and display contents that have not been displayed, through one search list.

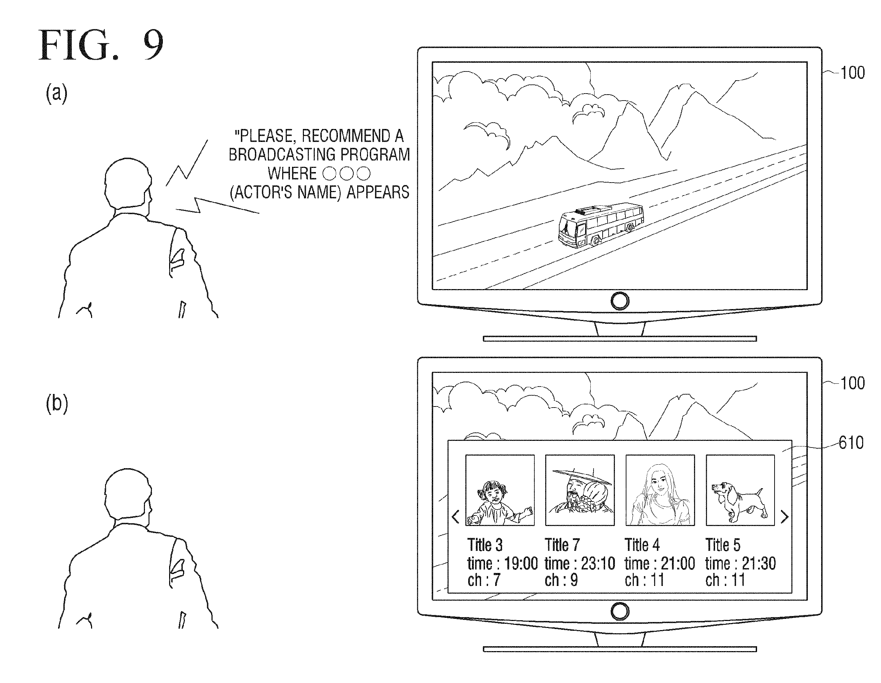

In the exemplary embodiment of (a) and (b) of FIG. 7, 9 broadcasting programs are searched from the EPG information, and 3 DVD contents are searched from the DVD player. Also, two contents may be displayed in each page of each search list.

In this case, the controller 150 may respectively display two broadcasting programs and two DVD contents on first pages 510 and 520 of respective search lists as shown in (b) of FIG..

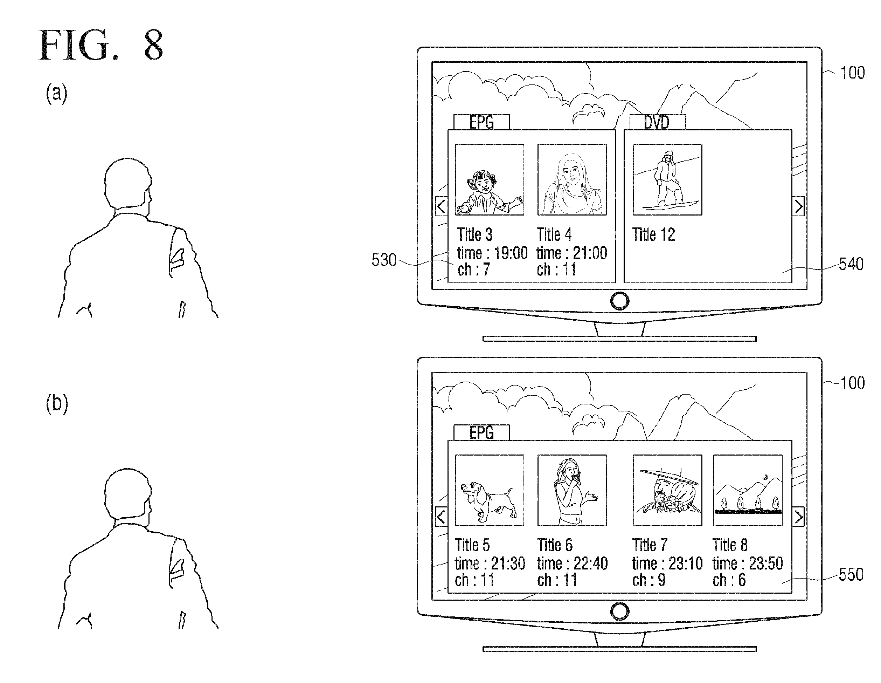

If a user command to display a next page is input, the controller 150 may respectively display two broadcasting programs and one DVD content, which have not been displayed on the first pages 510 and 520, on second pages 530 and 540 of the respective search lists as shown in (a) of FIG. 8.

Here, the controller 150 may determine that all of searched VOD contents have been displayed.

As described above, all of DVD contents are displayed. Therefore, if a user command to display a next page is input, the controller 150 may remove a search list of DVD contents and display a search list 550 of broadcasting programs as shown in (b) FIG. 8. In this case, the controller 150 may display contents by the number of contents that may be displayed through each search list. In other words, the controller 150 may display 4 broadcasting programs in the search list 550 of one broadcasting program.

According to another exemplary embodiment, as shown in (a) of FIG. 9, the user may utter "Please, recommend a broadcasting program where ○○○ (actor's name) appears."

In this case, the controller 330 may search for a broadcasting program where ○○○ (actor's name) appears, with reference to EPG information, and transmit information about the search broadcasting program to the display apparatus 100. Here, the controller 330 may transmit viewer rating information of the broadcasting program where ○○○ (actor's name) appears, to the display apparatus 100.

Therefore, as shown in (b) of FIG. 9, the controller 150 may output a system response corresponding to "Please, recommend a broadcasting program where ○○○ (actor's name) appears.", based on response information received from the second server 300.

In detail, the controller 150 may display a recommendation list 610 that lists broadcasting programs where ○○○ (actor's name) appears in orders of viewer ratings. In this case, the controller 150 may add at least one of a broadcasting program name, a broadcasting time, a channel name and a channel number that provide a broadcasting program, an actor, a producer, etc. to the recommendation list 610.

Here, the controller 150 may control to the recommendation list 610 to include the preset number of contents. Therefore, if the number of searched contents is higher than the number of contents displayed through the recommendation list 610, the controller 150 may display the preset number of contents in the recommendation list 610 and change a page of the recommendation list 610 according to a user command to display the other contents. For this purpose, the controller 150 may display a GUI that is to select a previous page and a next page.

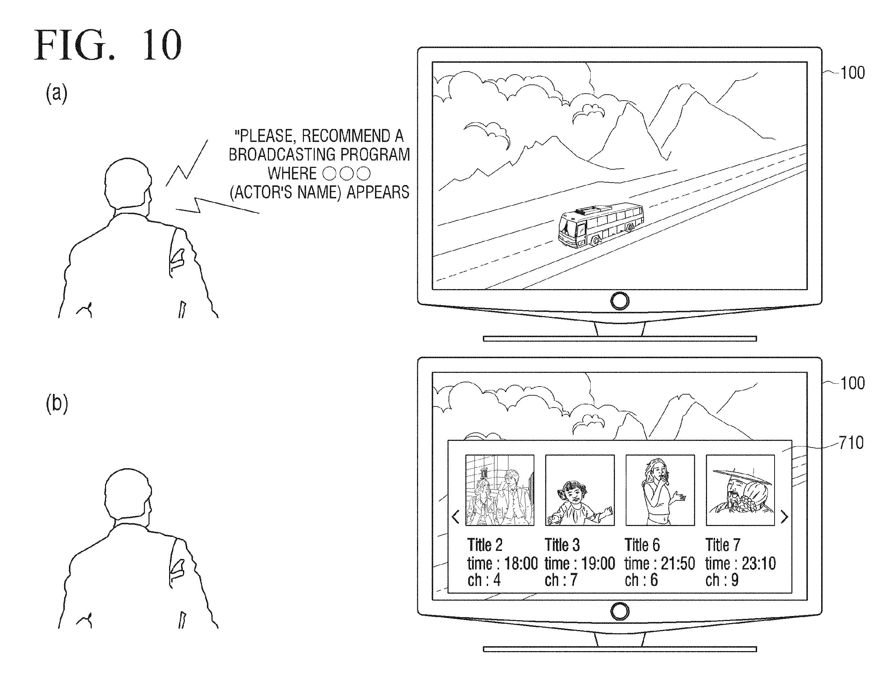

According to another exemplary embodiment, as shown in (a) of FIG. 10, the user may utter "Please, recommend a broadcasting program where ○○○ (actor's name) appears."

In this case, the controller 330 may search for a broadcasting program where ○○○ (actor's name) appears, with reference to EPG information, and transmit information about the searched broadcasting program to the display apparatus 100. Here, the controller 330 may transmit user preference information to the display apparatus 100. Here, the user preference information may include a genre of a broadcasting program that the user has frequently viewed.

Therefore, as shown in (b) of FIG. 10, the controller 150 may output a system response corresponding to "Please, recommend a broadcasting program where ○○○ (actor's name) appears," based on the response information received from the second server 300.

In detail, the controller 150 may display a recommendation list 710 that lists broadcasting programs having the same genres as the broadcasting program having a high viewing frequency, among broadcasting programs where ○○○ (actor's name) appears.

For example, if the genre of the broadcasting program having a high viewing frequency is drama, the controller 150 may display the recommendation list 710 that lists broadcasting programs having genres of drama among the broadcasting programs where ○○○ (actor's name) appears. Here, the controller 150 may display the recommendation list 710 including a broadcasting program having the same genre as the broadcasting program having a high viewing frequency. Here, the controller 150 may generate the recommendation list 710 to list broadcasting programs in orders of broadcasting time.

The controller 150 may add at least one of a broadcasting program name, a broadcasting time, a channel name and a channel number that provide a broadcasting program, an actor, a producer, etc. to the recommendation list 710.

Here, the controller 150 may control the recommendation list 710 to include the present number of contents. Therefore, if the number of contents is higher than the number of contents displayed through the recommendation list 710, the controller 150 may display the preset number of contents on the recommendation list 710 and change a page of the recommendation list 710 according to a user command to display the other contents. For this purpose, the controller 150 may display a GUI that is to select a previous page and a next page.

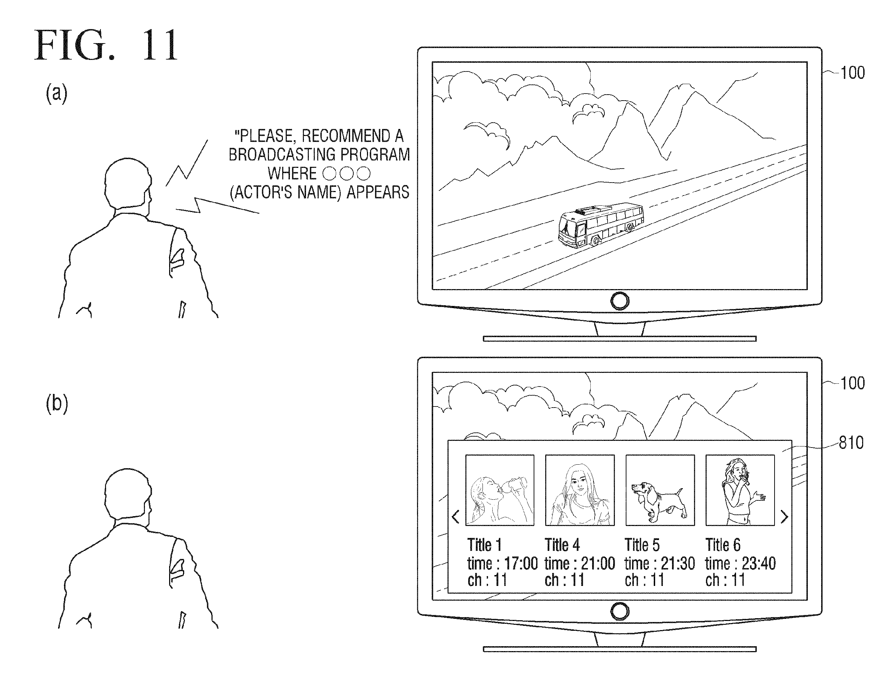

According to another exemplary embodiment, as shown in (a) of FIG. 11, the user may utter "Please, recommend a broadcasting program where ○○○ (actor's name) appears."

In this case, the controller 330 may search for a broadcasting program where ○○○ (actor's name) appears, with reference to EPG information, and transmit information about the searched broadcasting program to the display apparatus 100. Here, the controller 330 may transmit user preference information to the display apparatus 100. Here, the user preference information may include information about a channel that the user has recently viewed.

Therefore, as shown in (b) of FIG. 11, the controller 150 may output a system response corresponding to "Please, recommend a broadcasting program where ○○○ (actor's name) appears," based on the response information received from the second server 300.

In detail, the controller 150 may display a recommendation list 810 including a broadcasting program provided through a channel that the user has recently viewed, among broadcasting programs where ○○○ (actor's name) appears.

For example, if a channel that the user has recently viewed is 11, the display apparatus 100 may display the recommendation list 810 that includes a broadcasting program provided through channel 11 among the broadcasting programs where ○○○ (actor's name) appears. Here, the controller 150 may generate the recommendation list 810 to list the broadcasting programs in orders of broadcasting times.

The controller 150 may add at least one of a broadcasting program name, a broadcasting time, a channel name and channel number that provides a broadcasting program, an actor, a producer, etc., to the recommendation list 810.

Here, the controller 150 may control the recommendation list 810 to include the preset number of contents. If the number of searched contents is higher than the number of contents displayed through the recommendation list 810, the controller 150 may display the preset number of contents on the recommendation list 810 and change a page of the recommendation list 810 according to a user command to display the other contents. For this purpose, the controller 150 may display a GUI that is to select a previous page and a next page.

In the above-described exemplary embodiments of FIGS. 9 through 11, the controller 330 searches for a content with reference to EPG information. However, this is only an example. In the above-described exemplary embodiments of FIG. 7, the controller 330 may search for a content matching with an utterance intention of the user among contents stored in a content provider server providing EPG information and a VOD service and the external apparatus connected to the display apparatus 100 and transmit the search result to the display apparatus 100.

In the above-described exemplary embodiments of FIGS. 10 through 11, the controller 330 generates a recommendation list by using each of viewer rating information and user preference information. However, this is only an example.

Alternatively, the controller 150 may generate a recommendation list based on viewer rating information, generate a recommendation list based on user preference information, and display the recommendation lists on one screen. Also, the controller 150 may display recommendation lists, which are generated based on information of the user preference information, on the one screen.

For example, the user may utter "Please, recommend a broadcasting program where ○○○ (actor's name) appears."

In this case, the controller 330 may search for a broadcasting program where ○○○ (actor's name) appears, with reference to EPG information, and transmit information about the searched broadcasting program to the display apparatus 100. Here, the controller 330 may transmit viewer rating information and user preference information to the display apparatus 100.

Therefore, the controller 150 may output a system response corresponding to "Please, recommend a broadcasting program where ○○○ (actor's name) appears.", based on the response information received from the second server 300.

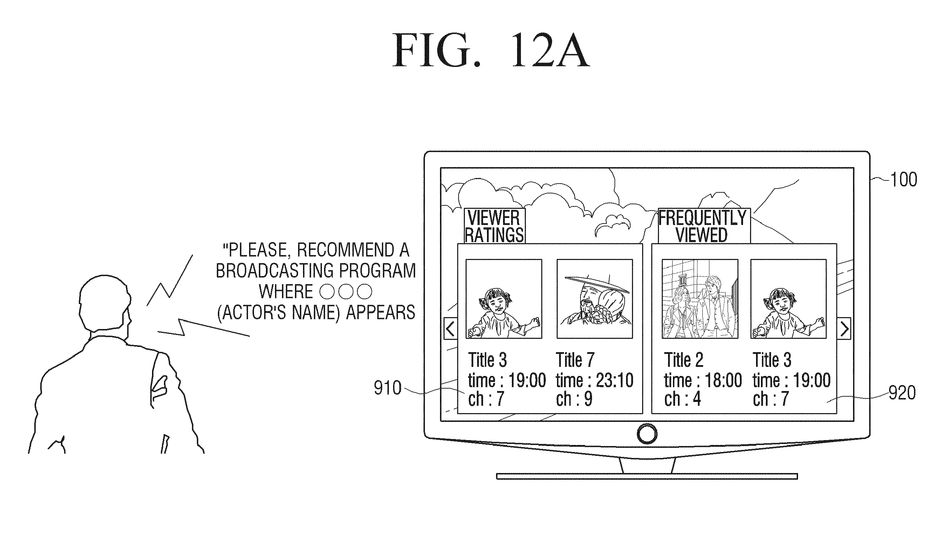

In detail, as shown in FIG. 12A, the controller 150 may display a recommendation list 910 and a recommendation list 920 on one screen, wherein the recommendation list 910 lists broadcasting programs where ○○○ (actor's name) appears in orders of viewer ratings, and the recommendation list 920 lists broadcasting programs having the same genres as a broadcasting program that the user has high frequently viewed.

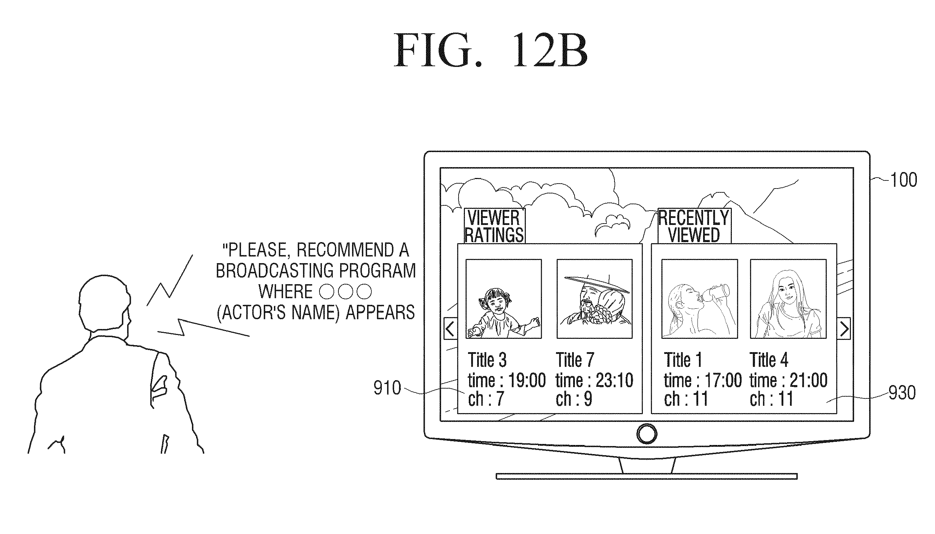

Alternatively, as shown in FIG. 12B, the controller 150 may display the recommendation list 910 and a recommendation list 930 on the one screen, wherein the recommendation list 910 lists the broadcasting programs where ○○○ (actor's name) appears in orders of viewer ratings, and the recommendation list 930 lists broadcasting programs provided through a channel that the user has recently viewed.

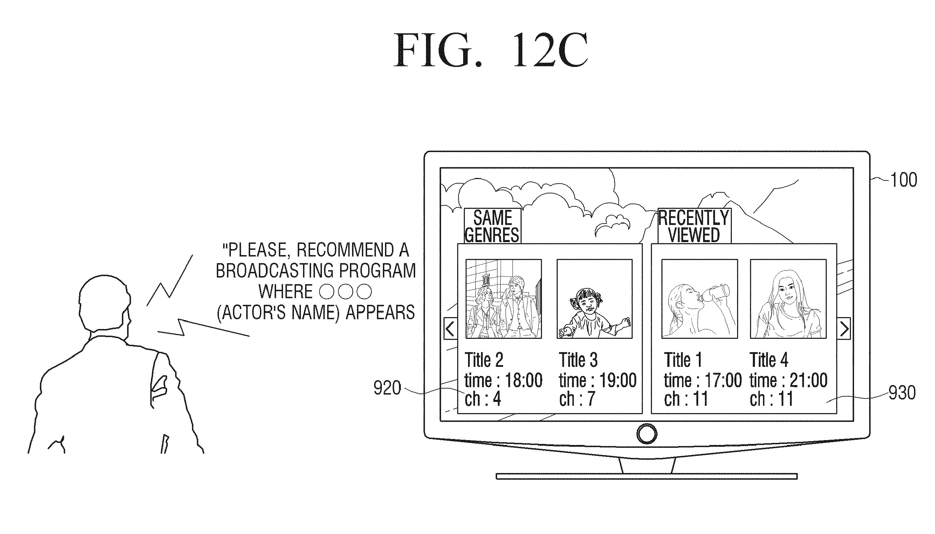

Alternatively, as shown in FIG. 12C, the controller 150 may display the recommendation list 920 and the recommendation list 930 on the one screen, wherein the recommendation list 920 lists the broadcasting programs having the same genres as the broadcasting program of high viewing frequency, and the recommendation list 930 lists the broadcasting programs provided through the channel that the user has recently viewed.

Here, the controller 150 may control to include the preset number of contents on a recommendation list. Therefore, if the number of searched contents is higher than the preset number of contents displayed through the recommendation list, the controller 150 may display the preset number of contents on the recommendation list and change a page of the recommendation list according to a user command to display the other contents. For this purpose, the controller 150 may display a GUI that is to select a previous page and a next page.

If contents provided on one recommendation list in a process of displaying the other contents according to a page change include contents that have not been displayed but include all of contents that have been provided and displayed on another recommendation list, the controller 150 may remove a recommendation list that displays all of contents and display the contents that have not been displayed, through the other recommendation list. This may apply the method described above with reference to FIG. 8, and thus its detailed description is omitted.

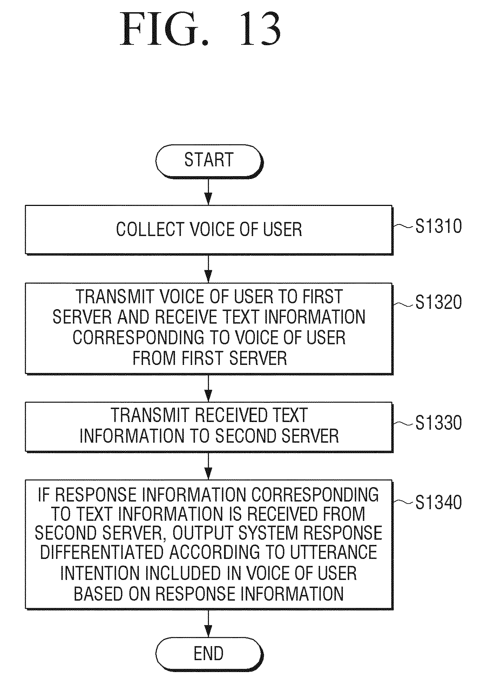

FIG. 13 is a flowchart illustrating a method of controlling a display apparatus according to an exemplary embodiment.

In operation S1310, the display apparatus 100 collects a voice of a user.

In operation S1320, the display apparatus 100 transmits the voice of the user to a first server 200 and receives text information corresponding to the voice of the user from the first server 200. The first server 200 may generate text information corresponding to the voice of the user by using an STT engine and transmit the text information to the display apparatus 100.

In operation S1330, the display apparatus 100 transmits the received text information to a second server 300. In this case, the second server may generate different types of response information according to whether the text information includes a keyword having an intention of searching for a content or a keyword having an intention of being recommended a content, and transmit the different types of response information to the display apparatus 100.

If the display apparatus 100 receives response information corresponding to the text information from the second server 200, the display apparatus 100 outputs a system response differentiated according to an utterance intention included in the voice of the user, based on the response information in operation S1340. Here, the utterance intention may be related to a content search or a content recommendation.
If the utterance intention is related to the content search, the display apparatus 100 may output a search list of contents searched according to the utterance intention as a system response.

For this purpose, the response information may include information about the contents searched according to the utterance intention. The display apparatus 100 may generate a search list of contents based on the received information about the contents and output the generated search list. Here, the display apparatus 100 may generate the search list to list the search contents in order of broadcasting times.

If the utterance intention is related to the content recommendation, the display apparatus 100 output a recommendation list of contents, which are selected from the contents searched according to the utterance intention, based on viewer ratings, as a system response.

For this purpose, the response information may include information about the contents searched according to the utterance intention and information about the viewer ratings. Therefore, the display apparatus 100 may generate a recommendation list of contents based on the received information and output the generated recommendation list. Here, the display apparatus 100 may generate the recommendation list to list the searched contents in order of high viewer ratings based on the information about the viewer ratings.

If the utterance intention is related to the content recommendation, the display apparatus 100 may output a recommendation list of contents, which are selected from the contents searched according to the utterance intention, based on user preference information, as a system response. Here, the user preference information may include information about a genre of a content that the user has frequently viewed and a channel that the user has recently viewed.

For this purpose, the response information may include information about the contents searched according to the utterance intention of the user and the user preference information. Therefore, the display apparatus 100 may generate and output a recommendation list of contents based on the received information. In detail, the display apparatus 100 may generate the recommendation list so that the recommendation list includes a content having the same genre as the content of high viewing frequency among the searched contents. The display apparatus 100 may also generate the recommendation list so that the recommendation list includes a content provided through the channel that the user has recently viewed among the searched contents.

According to various exemplary embodiments as described above, a display apparatus 100 may output a system response that further matches with an utterance intention of a user. Therefore, convenience of the user may be increased, and the user may be provided with interactive information through interactions.

As discussed above, embodiments of the invention provide an electronic apparatus comprising: an output; a voice collector configured to receive a voice signal of a user; a first communicator configured to transmit the voice signal of the user to a first server and receive text information corresponding to the voice signal of the user from the first server; a second communicator configured to transmit the received text information to a second server; and a controller configured to, in response to response information corresponding to the text information being received from the second server, control the output to output a system response corresponding to an utterance intention included in the voice signal of the user based on the response information, wherein the utterance intention relates to a search for content or a recommendation of content. The system response may be differentiated according to an utterance intention included in the voice of the user.

Embodiments of the invention can also provide a method of controlling an electronic apparatus, the method comprising: receiving a voice signal of a user; transmitting the voice signal of the user to a first server and receiving text information corresponding to the voice signal of the user from the first server; transmitting the received text information to a second server; and in response to response information corresponding to the text information being received from the second server, outputting a system response corresponding to an utterance intention included in the voice of the user based on the response information, wherein the utterance intention relates to a search for content or a recommendation of content.
Embodiments of the invention can also provide a server configured to communicate with an electronic device, the server including: a communicator configured to receive, from the electronic device, text information corresponding to the voice of a user and transmit, to the electronic device, response information corresponding to the text information; a storage configured to store information for generating the response information; and a controller configured to determine an utterance intention included in the received text information and generate the response information based on the utterance intention and the received text information, wherein the utterance intention relates to a search for content or a recommendation of content.

There may be provided a non-transitory computer-readable medium that stores a program that sequentially performs a control method according to the exemplary embodiment.

The non-transitory computer-readable medium refers to a medium semi-permanently stores data and is readable by a device. In detail, the above-described applications or programs may be stored and provided on a non-transitory computer readable medium such as a CD, a DVD, a hard disk, a blue-ray disk, a universal serial bus (USB), a memory card, a ROM, or the like.

Also, a bus has not been illustrated in the above-described block diagrams illustrating a display apparatus and servers. However, communications between elements of the display apparatus and elements of the servers may be performed through the bus. Also, each device may further include at least one of a processor, such as a central processing unit (CPU), a microprocessor, a hardware module, a circuit, or the like, that performs the above-described various operations.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the inventive concept, as defined by the appended claims, and many alternatives, modifications, and variations will be apparent to those skilled in the art.

## Claims

1. An electronic apparatus comprising:
an output;
a voice collector configured to receive a voice signal of a user;
a first communicator configured to transmit the voice signal of the user to a first server and receive text information corresponding to the voice signal of the user from the first server;
a second communicator configured to transmit the received text information to a second server; and
a controller configured to, in response to response information corresponding to the text information being received from the second server, control the output to output a system response corresponding to an utterance intention included in the voice signal of the user based on the response information,
wherein the utterance intention relates to a search for content or a recommendation of content.

2. The electronic apparatus of claim 1, wherein the second server is further configured to generate different types of the response information according to whether the text information comprises a keyword indicating that the utterance intention relates to the search for the content or a keyword indicating that the utterance intention relates to the recommendation of the content and transmit the different types of the response information to the electronic apparatus.

3. The electronic apparatus of claim 1 or 2, wherein in response to the utterance intention being related to the search for content, the controller is further configured to output a search list of contents, searched according to the utterance intention, as the system response.

4. The electronic apparatus of anyone of claims 1 to 3, wherein in response to the utterance intention being related to the recommendation of content, the controller is further configured to output a recommendation list of contents, which are selected from contents searched according to the utterance intention, based on viewer ratings, as the system response.

5. The electronic apparatus of anyone of claims 1 to 4, wherein in response to the utterance intention being related to the recommendation of content, the controller is further configured to output a recommendation list of contents, which are selected from contents searched according to the utterance intention, based on user preference information, as the system response.

6. The electronic apparatus of anyone of claims 1 to 5, wherein the electronic apparatus is a display apparatus.

7. A method of controlling an electronic apparatus, the method comprising:
receiving a voice signal of a user;
transmitting the voice signal of the user to a first server and receiving text information corresponding to the voice signal of the user from the first server;
transmitting the received text information to a second server; and
in response to response information corresponding to the text information being received from the second server, outputting a system response corresponding to an utterance intention included in the voice of the user based on the response information,
wherein the utterance intention relates to a search for content or a recommendation of content.

8. The method of claim 7, wherein the second server is further configured to generate different types of the response information according to whether the text information comprises a keyword indicating that the utterance intention relates to the search for content or a keyword indicating that the utterance intention relates to the recommendation of content and transmit the different types of the response information to the electronic apparatus.

9. The method of claim 7 or 8, wherein in response to the utterance intention being related to the search for content, a search list of contents, searched according to the utterance intention, is output as the system response.

10. The method of anyone of claims 7 to 9, wherein in response to the utterance intention being related to the recommendation of content, a recommendation list of contents, which are selected from contents searched according to the utterance intention, based on viewer ratings, is output as the system response.

11. The method of anyone of claims 7 to 10, wherein in response to the utterance intention being related to the recommendation of content, a recommendation list of contents, which are selected from contents searched according to the utterance intention, based on user preference information, is output as the system response.

12. The method of anyone of claims 7 to 11, wherein the electronic apparatus is a display apparatus.

13. A server configured to communicate with an electronic device, the server including:
a communicator configured to receive, from the electronic device, text information corresponding to the voice of a user and transmit, to the electronic device, response information corresponding to the text information;
a storage configured to store information for generating the response information; and
a controller configured to determine an utterance intention included in the received text information and generate the response information based on the utterance intention and the received text information, wherein the utterance intention relates to a search for content or a recommendation of content.
